# FASCICULE DE BREVET EUROPEEN

(11) **EP 4 274 417 B1**
(45) Date de publication et mention de la délivrance du brevet: **30.09.2026**
(21) Numéro de dépôt: 21836213.5
(22) Date de dépôt: 22.12.2021
(51) Int. Cl.: A01N 25/04, A01N 25/30, C08G 69/10, C08L 77/04

(54) **COMPOSITION PHYTOSANITAIRE COMPRENANT COMME AGENT ÉPAISSISSANT UNE COMPOSITION QUI PRÉSENTE DES PROPRIÉTÉS ÉPAISSISSANTES DE MILIEUX POLAIRES**
PFLANZENSCHUTZMITTELZUSAMMENSETZUNG MIT EINER ZUSAMMENSETZUNG MIT POLARMEDIENVERDICKENDEN EIGENSCHAFTEN ALS VERDICKUNGSMITTEL
PHYTOSANITARY COMPOSITION COMPRISING, AS THICKENING AGENT, A COMPOSITION HAVING POLAR MEDIA THICKENING PROPERTIES

(30) Priorité: 07.01.2021 FR 2100110
(43) Date de publication de la demande: 15.11.2023
(73) Titulaire: Société d'Exploitation de Produits pour les Industries Chimiques SEPPIC, 75321 Paris cedex 07 (FR)
(72) Inventeur: BODOC, Miruna, 81100 Castres (FR); MONTEILLET, Stéphane, 81100 Castres (FR)
(74) Mandataire: Alatis
(86) Numéro de dépôt international: PCT/EP2021/087354
(87) Numéro de publication internationale: WO 2022/148661

(56) Documents cités:
- CN-A- 101 891 954
- CN-A- 102 002 234
- CN-A- 103 804 697
- CN-A- 105 255 173
- CN-A- 109 266 358
- JP-A- 2016 121 287

## Description

La présente invention est relative à une composition phytosanitaire (F) comprenant au moins un principe actif phytosanitaire et comme agent épaississant une composition (C_{A}) se présentant sous la forme d'une émulsion de type eau-dans-huile auto-inversible et le procédé de préparation d'une telle composition.

Les polymères sont largement utilisés aujourd'hui dans les formulations phytosanitaires et représentent la deuxième famille de produits les plus utilisés dans ce type de formulations complexes. Les compositions phytosanitaires contiennent des phases polaires comme par exemple des phases constituées d'eau, et nécessitent dans la plupart des cas l'utilisation d'agents modificateurs de rhéologie, comme par exemple des polymères, pour augmenter la viscosité de ces phases polaires, ainsi que pour conférer un comportement rhéologique bien défini.

Parmi les polymères modificateurs de rhéologie des phases polaires, nous pouvons citer des polymères naturels, comme par exemple des polysaccharides à base d'oses ou des polysaccharides à base de dérivés d'oses, ou bien des polymères synthétiques, type polyélectrolyte, anionique ou cationique, amphiphile, linéaires ou ramifiés, réticulés ou non réticulés. Majoritairement présents sur le marché des ingrédients destinés au formulations phytosanitaires, les polymères synthétiques, présentent la propriété de se déployer, dans la phase polaire, sous l'effet des répulsions électrostatiques dues à la présence des charges (négatives et/ou positives) sur le squelette polymérique, linéaire ou ramifié, non-réticulé ou réticulé. Ces modificateurs de rhéologie apportent à la fois une augmentation de la viscosité de la phase polaire, ainsi qu'une certaine consistance et/ou un effet stabilisant à la formule formulation phytosanitaire.

Afin de répondre aux besoins des formulateurs, différents travaux scientifiques récents ont relaté la mise au point de nouveaux systèmes polymériques innovants et variés. Ainsi, les polymères utilisés dans le domaine phytosanitaire peuvent jouer un rôle fonctionnel en tant qu'agents filmogènes, agents modificateurs de rhéologie, agents permettant la stabilisation des phases grasses dans les émulsions huile-dans-eau et eau-dans-huile, ou la stabilisation de particules.

Les polymères modificateurs de rhéologie de phases polaires, plus particulièrement de phases aqueuses, sont principalement des polyélectrolytes, résultent de la polymérisation radicalaire de monomères de type (méth)acrylique, c'est-à-dire l'acide acrylique, l'acide méthacrylique, d'esters dérivés de l'acide acrylique ou de l'acide méthacrylique, ou encore des dérivés d'acrylamide ou du méthacrylamide.

Développer de nouveaux modificateurs de rhéologie biosourcés et biodégradables, aussi performants que les polymères synthétiques actuellement utilisés, constitue encore à ce jour un défi majeur et un enjeu pour les fournisseurs d'ingrédients phytosanitaires. En effet, jusqu'à présent les solutions majoritairement utilisées pour épaissir des phases polaires mettent en jeu des ingrédients provenant de matières premières d'origine pétrochimiques et notamment de l'acide acrylique et de ses dérivés, de l'acide méthacrylique et de ses dérivés.

Compte-tenu de la préoccupation croissante des consommateurs pour une économie et un développement durable, la substitution des matières premières d'origine pétrochimique par des matières premières d'origine renouvelable pour préparer des polymères, est un axe de recherche prioritaire.

A ce jour, il est décrit dans la littérature l'utilisation de différents polymères naturels ou provenant de matières premières renouvelables, dont les unités monomériques sont issues de la famille des sucres (glucose, arabinose, xylose, galactose, mannose, ribose, acide glucuronique, etc...) ou de la famille des acides aminés (acide glutamique, acide aspartique, lysine, etc...). Ces polymères sont majoritairement linéaires ou ramifiés selon le végétal dont ils sont issus ou selon leur procédé de fabrication.

A titre d'exemple de polymère d'origine naturelle, on peut citer l'acide polyglutamique (PGA) qui fait aujourd'hui l'objet de nombreux travaux de recherches. Il s'agit d'un polymère majoritairement linéaire et constitué d'unités monomériques acide glutamique (GA). L'acide glutamique est un acide aminé se caractérisant par une fonction amine en position α et par deux fonctions acides carboxyliques (ou carboxylates en fonction du pH) en positions α et Y (cf formule chimique n°1).

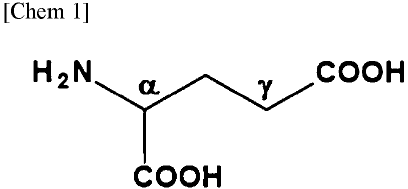

Structure chimique de l'acide glutamique (GA).

Une des voies pour augmenter la ramification d'un polymère synthétique, naturel ou d'origine naturelle consiste à réaliser des réactions de réticulation. La réticulation des chaînes polymériques a pour but de relier plusieurs chaînes polymériques les unes aux autres qui, lorsqu'ajoutées à une phase polaire, et plus particulièrement à de l'eau, se présentent à l'état d'un réseau tridimensionnel insoluble dans l'eau, mais gonflable à l'eau et conduisant alors à l'obtention d'un gel aqueux.

La demande de brevet japonais publiée sous le numéro JP 2018 121287 A, divulgue une résine absorbante d'eau qui est composé d'acide gamma-poly(glutamique) partiellement neutralisé et réticulé avec un composé poly glycidyl, notamment le polyéthylene glycol diglycidyl éther, le polypropylène glycol diglycidyl éther or le polyglycérine diglycidyl éther.

La demande de brevet chinois publiée sous le numéro CN 103 804 697 A, divulgue un procédé de préparation d'un hydrogel super-absorbant et son utilisation pour préparer un fertilisant qui comprend la préparation d'acide poly(glutamique) réticulé avec du polyéthylène glycol glycidyl éther.

La demande de brevet chinois publiée sous le numéro CN109 266 358 A, divulgue un composé agricole résistant à l'eau et à la sécheresse comprenant de l'acide(polyglutamique) réticulé avec l'éthylèneglycol diglycidyl éther en un ratio molaire (PGA)/réticulant = 1-2 ou 1-3) et de la fibre de cellulose, notamment de la fibre de paille.

La demande de brevet chinois publiée sous le numéro CN 102 002 234 A, divulgue un procédé de préparation d'un composé qui retient l'eau qui met en œuvre une solution aqueuse d'acide gamma-poly(glutamique) un réticulant éther de polyglycérol comme polyéthylène glycol diglycidyl éther or polypropylène glycol diglycidyl éther en une proportion massique compris entre 60% et 100 de la masse d'acide gamma-poly(glutamique).

La demande de brevet chinois publiée sous le numéro CN 101 891 954 A, divulgue un procédé de préparation d'un hydrogel qui comprend la préparation d'acide gammapoly(glutamique) réticulé avec de l'éthylène glycol diglycidyl éther (EDGGE) dans un rapport massique (EDGGE) /y-PGA =0,4.

La demande de brevet chinois publiée sous le numéro CN 105 255 173 A, divulgue un procédé de préparation d'un hydrogel qui comprend la préparation d'acide gammapoly(glutamique) réticulé avec un composé choisi parmi de l'éthylène glycol diglycidyl éther, le polyéthylène glycol diglycidyl éther et le 1,4-butanediol diglycidyl éther dans une proportion massique comprise entre 3% et 20% de la masse de l'acide gammapoly(glutamique).

La préparation de polymères réticulés peut s'effectuer :
- En une étape par la mise en réaction des monomères et de l'agent de réticulation pendant la réaction de polymérisation, ou bien
- En au moins deux étapes, dont la première consiste à préparer le polymère, et la deuxième consiste à faire réagir le polymère avec un agent de réticulation pour obtenir un polymère réticulé.

Il existe différentes réactions de réticulation de l'acide polyglutamique (PGA), ce qui permet d'obtenir des polymères d'origine naturelle avec des propriétés épaississantes en milieux polaires et notamment aqueux améliorées. Parmi les agents réticulants connus pour être utilisés dans la réaction de réticulation de l'acide polyglutamique (PGA), les dérivés polyépoxydes sont les plus décrits, car ils permettent de mettre en oeuvre des procédés de réticulation dans des conditions respectueuses de l'environnement (température modérées, réaction en milieux aqueux et en l'absence de solvants nocifs).

Cependant, la mise en œuvre de ces procédés nécessite de diluer le (PGA) à des taux élevés, ce qui conduit à l'obtention d'une composition se présentant sous la forme de gels aqueux comprenant pour 100% de sa masse une teneur massique inférieure à 10% d'un polymère (P), et difficile à mettre en œuvre par les formulateurs.

Partant de là, un problème qui se pose est de fournir une composition phytosanitaire facile à utiliser, comprenant des polymères d'origine naturelle, dont les matières premières sont renouvelables et qui présentent des propriétés épaississantes de milieux polaires et plus particulièrement en milieux aqueux.

Une solution de la présente invention est une composition aqueuse phytosanitaire (F) comprenant au moins un principe actif phytosanitaire et comme agent épaississant et pour 100% de sa masse, de 0,1% à 10% massique d'une composition (C_{A}) comprenant au moins un agent émulsionnant de type eau-dans-huile (S1) et au moins au moins un agent émulsionnant de type huile-dans-eau (S2) se présentant sous la forme d'une émulsion de type eau-dans-huile auto-inversible comprenant pour 100% de sa masse une teneur massique supérieure ou égale à 20% et inférieure ou égale à 60% d'acide gamma-poly(glutamique) (PGGA) sous forme acide, ou partiellement ou totalement salifié consistant en des unités monomériques issues d'acide glutamique (GA), partiellement ou totalement salifié, et en, pour 100% molaire des dites unités monomériques issues de l'acide glutamique (GA), de 0,5% à 20% molaire d'unités issues d'un agent réticulant (AR) portant au moins deux fonctions glycidyle.

Par « émulsion de type eau-dans-huile », on désigne au sens de la présente invention un mélange hétérogène de deux liquides immiscibles, l'un étant dispersé sous forme de petites gouttelettes dans l'autre, ledit mélange étant thermodynamiquement instable et stabilisé par la présence d'un système tensioactif comprenant au moins un agent tensioactif émulsionnant.

Par « émulsion de type eau-dans-huile auto-inversible», on désigne au sens de la présente invention une émulsion de type eau-dans-huile telle que définie ci-dessus, dans laquelle les agents tensioactifs émulsionnants présents confèrent à l'émulsion une balance hydrophilelipophile (HLB) telle qu'une fois ladite émulsion ajoutée dans une phase polaire, comme par exemple l'eau, changera de sens d'émulsion pour passer de la forme eau-dans-huile vers la forme huile-dans-eau, permettant alors de mettre en contact le polymère (P) avec la phase polaire à épaissir.

Dans l'acide gamma-poly(glutamique) (PGGA) sous forme acide, ou partiellement ou totalement salifié la composition (C_{A}) objet de la présente invention, les unités monomériques issues de l'acide glutamique (GA), partiellement ou totalement salifié, sont liées entre-elles de telle sorte que la fonction amine d'une unité monomérique d'acide glutamique (GA) est liée de façon covalente à la fonction carboxylique de la chaîne latérale située en position gamma (Y) d'une seconde unité monomérique d'acide glutamique (GA); le polymère résultant est alors nommé "acide Υ-polyglutamique" ou PGGA (cf formule chimique n°3) partiellement ou totalement salifié.

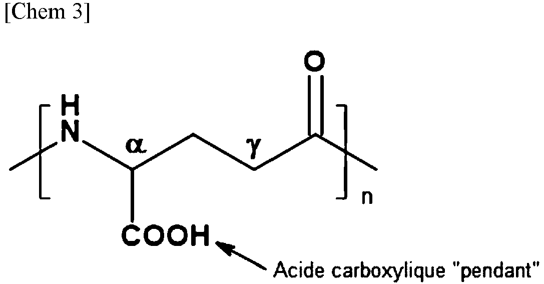

Structure chimique de l'acide Υ-polyglutamique ou PGGA.

D'une manière générale, le PGA peut être préparé par voie chimique selon des procédés de synthèses peptidiques connus de l'homme du métier passant notamment par des étapes de protection(s) sélective(s), d'activation, de couplage et de déprotection(s). Le couplage consiste généralement en une attaque nucléophile de la fonction amine d'une unité monomérique d'acide glutamique sur une fonction acide carboxylique activée d'une autre unité monomérique d'acide glutamique.

Le PGGA peut également être obtenu selon des procédés comprenant au moins une étape de fermentation microbienne impliquant l'utilisation d'au moins une souche bactérienne.

Au sens de la présente invention, le terme «salifié» indique que la fonction acide carboxylique "pendante" présente sur chaque unité monomérique d'acide glutamique (GA) du polymère (en position alpha dans le cas du PGGA se trouve sous une forme anionique ou carboxylate. Le contre-ion de cette fonction carboxylate est un cation dérivé, par exemples, de sels de métaux alcalins tels que le sodium, le potassium ou de sels de bases azotées tels que des amines, la lysine ou la monoéthanolamine (HO-CH2- CH2-NH2).

Par "agent réticulant (AR)", on désigne au sens de la présente invention une molécule chimique dont la structure permet de se lier de façon covalente à au moins deux chaînes polymériques.

Par "agent réticulant (AR) portant au moins deux fonctions glycidyles", on désigne au sens de la présente invention un agent réticulant (AR) tel que défini ci-dessus dont la structure moléculaire comprend au moins deux motifs ou fonctions glycidyles de formule (I') :

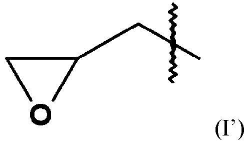

La réticulation des chaînes polymériques de l'acide gamma-poly(glutamique) (PGGA) sous forme acide, ou partiellement ou totalement salifié s'effectue selon une réaction entre la fonction amine libre terminale (-NH2) et/ou une ou plusieurs fonctions carboxyliques ou carboxylates "pendantes" ou terminale (-COOH ou -COO⁻) présentes dans la structure dudit acide gamma-poly(glutamique) (PGGA) sous forme acide, ou partiellement ou totalement salifié, et au moins un groupe époxy présent dans la structure de l'agent réticulant (AR) portant au moins deux fonctions glycidyle.

Dans le cadre de la présente invention, l'agent réticulant (AR) est choisi parmi les membres du groupe constitué par :
l'éthylèneglycol diglycidyl éther de formule (I) :

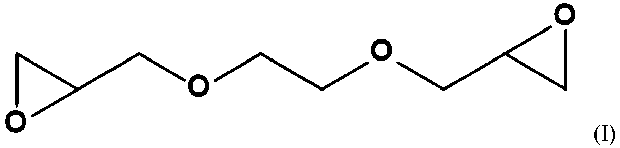

- le 1,3 propanediol diglycidyl éther de formule (III) : 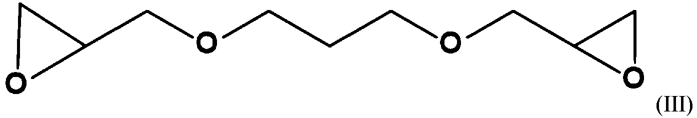
- le 1,2 propanediol diglycidyl éther de formule (IV) : 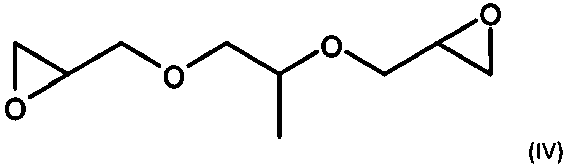
- le 1,4 butanediol diglycidyl éther de formule (V) 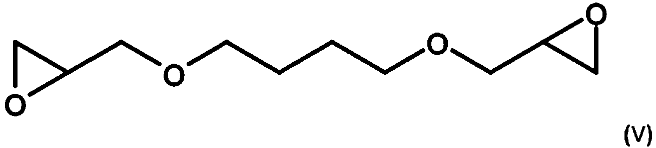
- le 1,2 butanediol diglycidyl éther de formule (VI) : 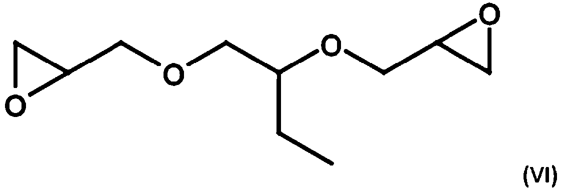
- le 1,3 butanediol diglycidyl éther de formule (VII) : 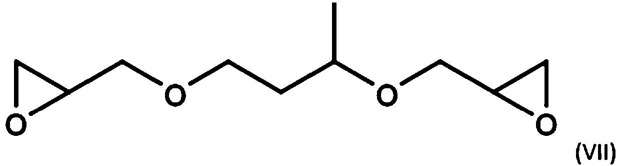
- Le 1,6 hexanediol diglycidyl éther de formule (VIII) : 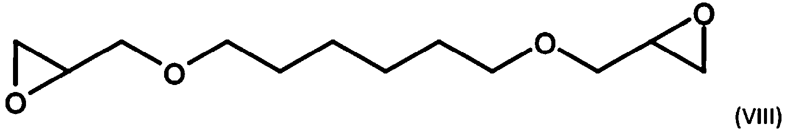
- Le triméthylol éthane triglycidyl éther de formule (IXb) : 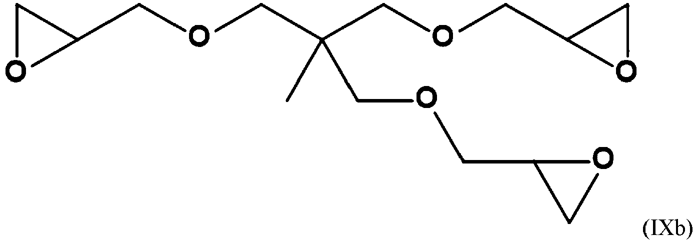
- Le triméthylol propane diglycidyl éther de formule (Xa) : 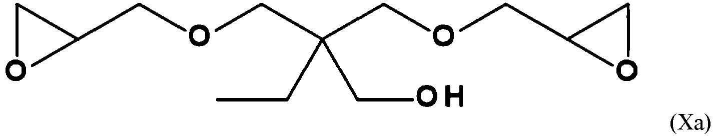
- et le Pentaérythritol diglycidyl éther de formule (XIa) :

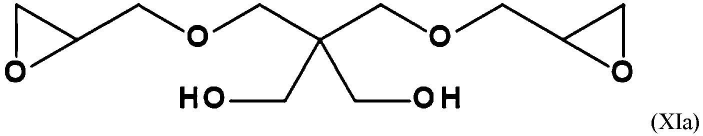

Selon le cas, la composition phytosanitaire peut présenter une ou plusieurs des caractéristiques suivantes :
- la composition (C_{A}) présente une viscosité comprise entre 100 mPa.s et 10.000 mPa.s (mesurée avec un viscosimètre de marque Brookfield, type RVT , vitesse 5 Tours/minute) ;
- la composition (CA) comprend en outre une unité monomérique issue du composé de formule (X') : 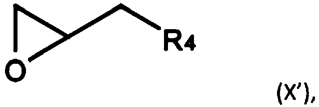
R4 représentant un radical hydrocarboné linéaire ou ramifié, saturé ou insaturé, fonctionnalisé ou non et comportant de 6 à 22 atomes de carbone.

Selon un aspect particulier, R4 représentant un radical hydrocarboné choisi parmi les éléments du groupe constitué par le radical heptyle, octyle, nonyle, décyle, undécyle, undécényle, dodécyle, tridécyle, tétradécyle, pentadécyle, hexadécyle, heptadécyle, octadécyle, hydroxyoctadécyle, oléyle, linoléyle, linolényle, eicosyle et dodécosyle.

Selon un autre aspect particulier, dans ledit acide gamma-poly(glutamique) (PGGA) sous forme acide, ou partiellement ou totalement salifié, pour 100% de la masse d'unités monomériques issues de l'acide glutamique (GA), partiellement ou totalement salifié, les unités monomériques issues du composé de formule (X') représentent de 1% à 50% massique.

Selon un autre aspect particulier, le principe actif phytosanitaire est un fongicide, un bactéricide, un herbicide, un insecticide ou un élément nutritif favorisant la croissance des plantes.

La présente invention a également pour objet un procédé de préparation d'une composition phytosanitaire (F) selon l'invention, comprenant :
- une étape A) de préparation de la composition (C_{A}) comprenant les sous-étapes suivantes :
   a. préparation d'une solution aqueuse comprenant pour 100% de sa masse entre 5 et 70% massique d'acide gamma- poly(glutamique) (PGGA), partiellement ou totalement salifié, et ledit agent réticulant (AR) comprenant au moins deux fonctions glycidylique ;
   b. ajustement du pH de la solution aqueuse obtenue à l'étape a) à un pH compris entre 3 et 11 ;
   c. préparation d'une phase organique contenant au moins une huile volatile, au moins une autre huile non volatile (H) et au moins un agent tensioactif émulsionnant de type eau dans huile (S₁) ;
   d. pré-émulsification par ajout sous agitation de la phase organique obtenue à l'étape c sur la solution aqueuse obtenue à l'étape b, de manière à ce que le rapport massique entre la solution aqueuse et la phase organique est compris entre 90/10 et 10/90, de préférence entre 20/80 et 40/60 ;
   e. émulsification de la pré-émulsion obtenue à l'étape d par homogénéisation sous agitation ;
   f. distillation de l'eau et de l'huile volatile contenues dans l'émulsion obtenue à l'étape e ;
   g. ajout d'au moins un agent tensioactif émulsionnant de type huile-dans-eau (S₂) de manière à obtenir la composition (C_{A}) et
- Une étape B) de mélange d'au moins une composition (C_{A}) préparée lors de l'étape A) avec de l'eau, et au moins un principe actif phytosanitaire.

Selon le cas, le procédé selon l'invention peut présenter une ou plusieurs des caractéristiques ci-dessous :
- à l'étape a. l'ensemble des unités monomériques constituant l'acide gamma-polyglutamique (PGGA) est issu du glutamate de sodium, du glutamate de potassium, du glutamate d'ammonium, du glutamate de calcium, du glutamate de magnésium ou d'un mélange de ces formes ;
- à l'étape a. l'agent réticulant (AR) est présent dans des proportions massiques comprises entre 0,5% et 10% massique par rapport à la masse d'acide gamma-polyglutamique (PGGA) ;
- à l'étape c. l'au moins agent émulsionnant de type eau-dans-huile (S₁) est choisi parmi les éléments du groupe constitué par les esters de sorbitan, les esters de polyglycérols, les esters de polyglycérols alcoxylés, les polyhydroxystéarates de polyglycols, les polyhydroxystéarates de polyglycérols, les polyhydroxystéarates de polyglycérols alcoxylés ;
- à l'étape c. la solution organique comprend pour 100% de sa propre masse entre 10 et 30% massique d'au moins un agent émulsionnant de type eau-dans-huile (S₁), de préférence entre 15% et 20% massique ;
- à l'étape c. l'agent émulsionnant de type eau-dans-huile (S₁) est un polyhydroxystéarate de polyglycérol ;
- à l'étape g. l'agent tensioactif émulsionnant de type huile-dans-eau (S₂) est choisi parmi les éléments du groupe constitué par un alcool gras polyéthoxylé, un ester d'hexitan polyéthoxylé, un alkylpolyglycoside, une composition d'alkylpolyglycoside et d'alcools gras, un ester de polyglycérol, une composition d'ester de polyglycérol et de polyglycérol ;
- dans l'étape a., la solution aqueuse comprend en outre au moins un composé de formule (X') : 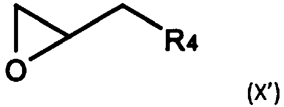 R4 représentant un radical hydrocarboné linéaire ou ramifié, saturé ou insaturé, fonctionnalisé ou non et comportant de 6 à 22 atomes de carbone. Selon un aspect particulier, R4 représente un radical hydrocarboné choisi parmi les éléments du groupe constitué par le radical heptyle, octyle, nonyle, décyle, undécyle, undécényle, dodécyle, tridécyle, tétradécyle, pentadécyle, hexadécyle, heptadécyle, octadécyle, hydroxyoctadécyle, oléyle, linoléyle, linolényle, eicosyle et dodécosyle. Selon un autre aspect particulier, la teneur en composé de formule (X') dans la solution polaire est comprise, pour 100% massique de ladite solution aqueuse, entre 0,05% et 35% massique, étant entendu que la somme des proportions massiques d'acide gammapoly(glutamique) (PGGA) sous forme acide, ou partiellement ou totalement salifié, de l'agent de réticulation (AR), de l'eau et du composé de formule (X') est égale à 100%.
- l'étape e) l'homogénéisation est réalisée sous agitation mécanique cisaillante ;
- à l'étape f) la distillation est réalisée sous vide et à chaud. Ceci a pour effet de réticuler l'acide polyglutamique et de concentrer l'émulsion ;
- aux étapes c) et f) l'huile volatile est une isoparaffine légère comportant de 8 à 11 atomes de carbone. Cette isoparaffine pourra être choisi parmi celles vendues sous les noms ISOPAR^{™} G, ISOPAR^{™} L ou ISOPAR^{™} H ou ISOPAR^{™} J.

Le choix d'un procédé en émulsion inverse concentrée permet de solubiliser l'acide polygamma glutamique (PGGA) de départ, ses éventuels co-constituants, ainsi que le/les réticulants dans la phase aqueuse de l'émulsion. La réalisation de l'émulsion permet de créer des gouttelettes isolées les unes des autres rendant possible la réticulation du PGGA sans prise en masse du milieu réactionnel dû à l'augmentation de viscosité de la phase aqueuse lors de l'étape de réticulation. L'étape de concentration par distillation d'une phase grasse légère conduit à l'obtention d'un produit sous forme liquide avec une teneur en matière active supérieure à 20%.

Selon un aspect particulier, dans la composition (CA) objet de la présente invention, la teneur massique de l'acide gamma-poly(glutamique) (PGGA) sous forme acide, ou partiellement ou totalement salifié est supérieure ou égale à 20% et inférieure ou égale à 40%.

Le PGGA peut exister sous différentes formes confonnationnelles en solution dans l'eau. Celles-ci dépendent des liaisons hydrogènes inter et intra moléculaires et donc du pH, de la concentration en polymère, de la force ionique de la solution, ainsi que de la température. Les chaînes du PGGA peuvent ainsi adopter une forme d'hélice α, de feuillet β, d'agrégats ou alors se trouver dans un état désordonné et aléatoire.

Selon un aspect particulier, dans la composition (CA) objet de la présente invention, l'acide gamma-poly(glutamique) (PGGA) sous forme acide, ou partiellement ou totalement salifié se trouve en conformation hélicoïdale lorsqu'il est présent dans une solution à une teneur massique inférieure ou égale à 0,1% et dont ladite solution montre une valeur du pH inférieure ou égale à 7.

Selon un aspect particulier, dans la composition (CA) objet de la présente invention, l'acide gamma-poly(glutamique) (PGGA) sous forme acide, ou partiellement ou totalement salifié se trouve en conformation feuillet lorsqu'il est présent dans une solution à une teneur massique inférieure ou égale à 0,1% et dont ladite solution montre une valeur du pH supérieure à 7.

Selon un aspect particulier de la composition (CA) objet de la présente invention, dans l'acide gamma-poly(glutamique) (PGGA) sous forme acide, ou partiellement ou totalement salifié, pour 100% molaire d'unités monomériques issues de l'acide glutamique (GA), partiellement ou totalement salifié, l'agent réticulant (AR) représente de 1% à 20% molaire, et encore plus particulièrement de 1% à 18% molaire.

Selon un autre aspect particulier, la composition (C_{A}) présente une viscosité comprise entre 1.000 mPa.s et 10.000 mPa.s (mesurée avec un viscosimètre de marque Brookfield, type RVT, vitesse 5 Tours/minute), plus particulièrement entre 1.000 mPa.s et 5.000 mPa.s.

Selon un autre aspect particulier, l'agent réticulant (AR) est l'éthylèneglycol diglycidyl éther de formule (I).

Selon un autre aspect particulier, dans l'étape a) du procédé objet de la présente invention, l'acide gamma-polyglutamique (PGGA) partiellement ou totalement salifié se présente sous la forme d'un sel de potassium, de sodium ou d'ammonium, et plus particulièrement sous la forme d'un sel de sodium.

Selon un autre aspect particulier, dans l'étape a) du procédé objet de la présente invention, la solution aqueuse comprend pour 100% de sa masse entre 5% et 60% massique, plus particulièrement entre 10% et 50% massique, d'acide gamma-polyglutamique (PGGA) partiellement ou totalement salifié.

Selon un autre aspect, dans l'étape c) du procédé objet de la présente invention, par "huile volatile" on désigne un corps gras liquide à une température de 25°C à pression atmosphérique, et dont le point éclair est compris entre 40 et 100°C.

Selon un aspect plus particulier, par "huile volatile" on désigne au sens de la présente invention un élément du groupe constitué par les alcanes ramifiés, comportant de sept à quarante atomes de carbone, comme l'isododécane, l'isopentadécane, l'isohexadécane, l'isoheptadécane, l'isooctadécane, l'isononadécane ou l'isoeicosane), ou des mélanges de certains d'entre eux comme ceux cités ci-après et identifiés par leur nom INCI : C7-8 isoparaffin, C8-9 isoparaffin, C9-11 isoparaffin, C9-12 isoparaffin, C9-13 isoparaffin, C9-14 isoparaffin, C9-16 isoparaffin, C10-11 isoparaffin, C10-12 isoparaffin, C10-13 isoparaffin, C11-12 isoparaffin, C11-13 isoparaffin, C11-14 isoparaffin.

Selon un aspect encore plus particulier, par "huile volatile" on désigne au sens de la présente invention au moins un élément du groupe constitué par l'isododécane, l'isohexadécane, le C7-8 isoparaffin, le C8-9 isoparaffin, le C9-11 isoparaffin, le C11-13 isoparaffin, le C11-14 isoparaffin.

Selon un autre aspect encore plus particulier de la présente invention, l'huile volatile est choisie parmi un élément du groupe constitué par le C8-9 isoparaffin, le C9-11 isoparaffin, le C11-13 isoparaffin, le C11-14 isoparaffin.

Selon un autre aspect encore plus particulier de la présente invention, "l'huile volatile" est choisie parmi un élément du groupe constitué par les isoparaffines commercialisées sous les noms de marque ISOPAR^{™} G, ISOPAR^{™} L ou ISOPAR^{™} H ou ISOPAR^{™} J.

Selon un autre aspect, dans l'étape c) du procédé objet de la présente invention, par "huile (H)" on désigne un corps gras liquide à une température de 25°C à pression atmosphérique, notamment :
- Les alcanes linéaires comportant de onze à dix-neuf atomes de carbone ;
- Les alcanes ramifiés, comportant de onze à quarante atomes de carbone, comme l'isododécane, l'isopentadécane, l'isohexadécane, l'isoheptadécane, l'isooctadécane, l'isononadécane ou l'isoeicosane), ou des mélanges de certains d'entre eux comme ceux cités ci-après et identifiés par leur nom INCI : C12-14 isoparaffin, C12-20 isoparaffin, C13-14 isoparaffin, C13-16 isoparaffin ;
- Les cyclo-alcanes optionnellement substitués par un ou plusieurs radicaux alkyles linéaires ou ramifiés,
- Les huiles blanches minérales, comme celles commercialisées sous les noms suivants: Marcol^{™}52, Marcol^{™}82, Drakeol^{™}6VR, Eolane^{™}130, Eolane^{™}150,
- L'hémisqualane (ou 2,6,10-triméthyl- dodécane ; numéro CAS : 3891-98-3), le squalane (ou 2,6,10,15,19,23-hexaméthyltetracosane), le polyisobutène hydrogéné ou le polydécène hydrogéné ;
- Les mélanges d'alcanes comportant de 15 à 19 atomes de carbone, lesdits alcanes étant des alcanes linéaires, des alcanes ramifiés et des cyclo-alcanes, et plus particulièrement le mélange (M1) qui comprend pour 100% de sa masse :
   ▪ une proportion massique en alcanes ramifiés supérieure ou égale à 90% et inférieure ou égale à 100%
   ▪ une proportion massique en alcanes linéaires supérieure ou égale à 0% et inférieure ou égale à 9%
   ▪ une proportion massique en cyclo-alcanes supérieure ou égale à 0% et inférieure ou égale à 1%, et encore plus particulièrement ledit mélange (M1) se caractérise en ce qu'il comprend pour 100% de sa masse :
      ▪ une proportion massique supérieure ou égale à 95% d'alcanes ramifiés, d'alcanes linéaires et de cycloalcanes et inférieure ou égale à 100% comportant de 15 à 19 atomes de carbone, et
      ▪ une proportion massique supérieure ou égale à 0% et inférieure ou égale à 5% d'alcanes ramifiés, d'alcanes linéaires et de cycloalcanes comportant moins de 14 atomes de carbone, et d'alcanes linéaires et de cycloalcanes comportant plus de 20 atomes de carbone ;
         par « alcanes linéaires » présents dans le mélange (M1) tel que défini ci-dessus, et comportant de 15 à 19 atomes de carbone, on désigne plus particulièrement au sens de la présente invention les éléments choisis parmi le groupe constitué par le n-pentadécane, le n-hexadécane, le n-heptadécane, le n-octadécane et le n-nonadécane ;
         par « alcanes ramifiés » présents dans le mélange (M1) tel que défini ci-dessus, et comportant de 15 à 19 atomes de carbone, on désigne plus particulièrement au sens de la présente invention les éléments choisis parmi le groupe constitué par l'iso-pentadécane, l'iso-hexadécane, l'iso-heptadécane, l'iso-octadécane et l'iso-nonadécane. Le mélange (M1) est plus particulièrement le mélange commercialisé sous le nom de marque Emogreen^{™}L15 ou bien le mélange commercialisé sous le nom de marque Emogreen^{™}L 19.
- Les éthers d'alcool gras de formule (XIV) :

   Z1-O-Z2 (XIV),

   dans laquelle Z1 et Z2 identiques ou différents, représentent un radical alkyle linéaire ou ramifié comportant de cinq à dix-huit atomes de carbone, par exemple les dioctyl éther, didécyl éther, didodécyl éther, dodécyl octyl éther, dihexadécyl éther, (1,3-diméthyl butyl) tétradécyl éther, (1,3-diméthyl butyl) hexadécyl éther, le bis(1,3-diméthyl butyl) éther ou le dihexyl éther.
- Les mono-esters d'acides gras et d'alcools de formule (XV) :

   R'1-(C=O)-O-R'2 (XV),

   dans laquelle R'1-(C=O) représente un radical acyle, saturé ou insaturé, linéaire ou ramifié, comportant de huit à vingt-quatre atomes de carbone, et R'2 représente, indépendamment de R'1, une chaîne hydrocarbonée saturée ou insaturée, linéaire ou ramifiée comportant de un à vingt-quatre atomes de carbone, par exemple les laurate de méthyle, laurate d'éthyle, laurate de propyle, laurate d'isopropyle, laurate de butyle, laurate de 2-butyle, laurate d'hexyle, cocoate de méthyle, cocoate d'éthyle, cocoate de propyle, cocoate d'isopropyle, cocoate de butyle, cocoate de 2-butyle, cocoate d'hexyle, myristate de méthyle, myristate d'éthyle, le myristate de propyle, le myristate d'isopropyle, le myristate de butyle, le myristate de 2-butyle, le myristate d'hexyle, le myristate d'octyle, le palmitate de méthyle, le palmitate d'éthyle, le palmitate de propyle, le palmitate d'isopropyle, le palmitate de butyle, le palmitate de 2-butyle, le palmitate d'hexyle, le palmitate d'octyle , l'oléate de méthyle, l' oléate d'éthyle, l'oléate de propyle, l'oléate d'isopropyle, l'oléate de butyle, l'oléate de 2-butyle, l'oléate d'hexyle, l'oléate d'octyle, le stéarate de méthyle, le stéarate d'éthyle, le stéarate de propyle, le stéarate d'isopropyle, le stéarate de butyle, le stéarate de 2-butyle, le stéarate d'hexyle, le stéarate d'octyle, l'isostéarate de méthyle, l'isostéarate d'éthyle, l'isostéarate de propyle, l'isostéarate d'isopropyle, l'isostéarate de butyle, l'isostéarate de 2-butyle, l'isostéarate d'hexyle, l'isostéarate d'isostéaryle ;
- Les di-esters d'acides gras et de glycérol de formules (XVI) et (XVII) :

   R'3-(C=O)-O-CH2-CH(OH)-CH2-O-(C=O)-R'4 (XVI)

   R'5-(C=O)-O-CH2-CH[O-(C=O)-R'6]-CH2-OH (XVII),

   dans lesquelles R'3-(C=O) et R'4-(C=O), R'5-(C=O), R'6-(C=O), identiques ou différents, représentent un groupement acyle, saturé ou insaturé, linéaire ou ramifié, comportant de huit à vingt-quatre atomes de carbone ;
- Les tri-esters d'acides gras et de glycérol de formule (XVIII) :

   R'7-(C=O)-O-CH2-CH[O-(C=O)-R"8]-CH2- O-(C=O)-R"9 (XVIII),

   dans laquelle R'7-(C=O), R'8-(C=O) et R'9-(C=O), identiques ou différents, représentent un groupement acyle, saturé ou insaturé, linéaire ou ramifié, comportant de huit à vingt-quatre atomes de carbone.

Selon un autre aspect particulier de la présente invention, ladite huile (H) est choisie parmi :
- L'undécane, le tridécane, l'isododécane ou l'isohexadécane,
- Les mélanges d'alcanes et d'isoalcanes et de cycloalcanes comme le mélange (M1) tel que défini précédemment et les mélanges commercialisés sous les noms Emogreen^{™}L15, Emogreen^{™}L19, Emosmart^{™}L15, Emosmart^{™}L19, Emosmart^{™}V21, Isopar^{™}M ;
- Les huiles blanches minérales commercialisées sous les noms Marcol^{™}52, Marcol^{™}82, Drakeol^{™}6VR, Eolane^{™}130 ou Eolane^{™}150 ;
- L'hémisqualane, le squalane, le polyisobutène hydrogéné ou le polydécène hydrogéné;
- Le dioctyl éther ou le didécyl éther ;
- Le myristate d'isopropyle, le palmitate d'hexyle, le palmitate d'octyle, l'isostéarate d'isostéaryle, l'octanoyl/décanoyl triglycéride, l'hexadécanoyl/octadécanoyl triglycéride, les triglycérides issus de l'huile de colza, de l'huile de tournesol, de l'huile de lin ou de l'huile de palme.

Selon un autre aspect, dans l'étape c. du procédé objet de la présente invention, par "agent tensioactif émulsionnant de type eau dans huile (S1)", on désigne un agent tensioactif émulsionnant possédant une valeur de HLB ("Hydrophile Lipophile Balance" ou équilibre hydrophile lipophile) suffisamment faible pour pour induire la formation d'une émulsion de type eau-dans-huile, à savoir une émulsion dans laquelle la phase aqueuse sera dispersée et stabilisée dans la phase organique huileuse.

Comme tensioactif émulsionnant de type eau-dans-huile, on peut citer par exemple les esters d'anhydro hexitol et d'acides carboxyliques aliphatiques, linéaires ou ramifiés, saturés ou insaturés, comportant de 12 à 22 atomes de carbone éventuellement substitués avec un ou plusieurs groupes hydroxyles, et plus particulièrement les esters d'anhydro hexitol choisis parmi les anhydro-sorbitols et les anhydro-mannitols et d'acides carboxyliques aliphatiques, linéaires ou ramifiés, saturés ou insaturés, comportant de 12 à 22 atomes de carbone éventuellement substitués avec un ou plusieurs groupes hydroxyles.

Dans l'étape c. du procédé objet de la présente invention, le système émulsionnant (S1) de type eau-dans-huile est plus particulièrement choisi parmi les éléments du groupe constitué par :
- le laurate de sorbitan, par exemple celui commercialisé sous le nom Montane^{™}20,
- le palmitate de sorbitan, par exemple celui commercialisé sous le nom Montane^{™}40,
- le stéarate de sorbitan, par exemple celui commercialisé sous le nom Montane^{™}60,
- l'oléate de sorbitan, par exemple celui commercialisé sous le nom Montane^{™}80,
- le sesquioléate de sorbitan, par exemple celui commercialisé sous le nom Montane^{™}83,
- le trioléate de sorbitan, par exemple celui commercialisé sous le nom Montane^{™}85,
- l'isolaurate de sorbitan,
- l'isostéarate de sorbitan, par exemple celui commercialisé sous le nom Montane^{™}70,
- le laurate de mannitan, l'oléate de mannitan, ou un mélange de ces esters ; les polyesters de poids moléculaire compris entre 1000 et 3000 g/mol et issus de la condensation entre un acide poly(isobutényl) succinique ou son anhydride, tels que l'HYPERMER^{™} 2296, ou le mélange commercialisé sous le nom de marque SIMALINE^{™}IE 501 A.

Comme tensioactif émulsionnant de type eau-dans-huile (S₁), on peut citer par exemple les esters de polyglycérol, un composé de formule (XIX) : 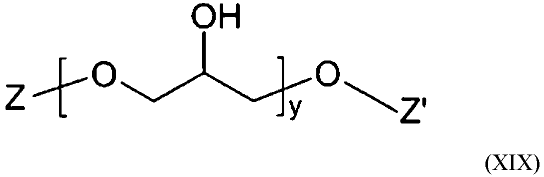 dans laquelle Z représente un radical acyle de formule R2-C(=O)-, dans laquelle R2 représente un radical aliphatique hydrocarboné, saturé ou insaturé, linéaire ou ramifié, comportant de 11 à 35 atomes de carbone et plus particulièrement un radical choisi parmi les radicaux dodécanoyle, tétradécanoyle, hexadécanoyle, octadécanoyle, eicosanoyle, docosanoyle, oléyle, linoléyle, linolénoyle ou isostéaryle, Z' représente le radical acyle de formule R2-C(=O)- tel que défini ci-dessus, avec Z' identique ou différent de Z, ou l'atome d'hydrogène, et y représente un nombre entier supérieur ou égal à 2 et inférieur ou égal à 20.

Selon un aspect plus particulier, le composé de formule (XIX) est choisi parmi les éléments du groupe constitué par l'oléate de décaglycérol, l'isostéarate de décaglycérol, le monolaurate de décaglycérol, le mono-linoléate de décaglycérol, le mono-myristate de décaglycérol.

Comme tensioactif émulsionnant de type eau-dans-huile (S₁), on peut citer par exemple les esters de polyglycérols alcoxylés, un composé de formule (XX) : 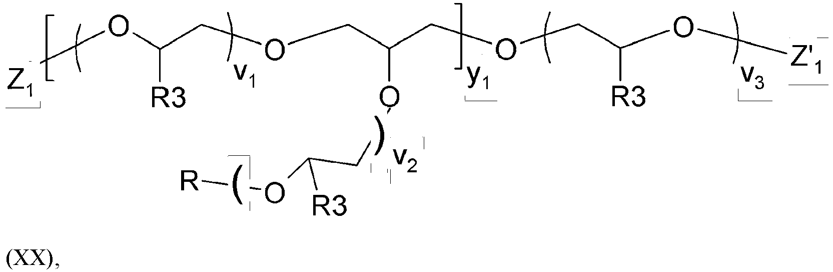 dans laquelle Z1 représente un radical acyle de formule R'2-C(=O)-, dans laquelle R'2 représente un radical aliphatique hydrocarboné, saturé ou insaturé, linéaire ou ramifié, comportant de 11 à 35 atomes de carbone, et plus particulièrement un radical choisi parmi les radicaux radicaux dodécanoyle, tétradécanoyle, hexadécanoyle, octadécanoyle, eicosanoyle, docosanoyle, oléyle, linoléyle, linolénoyle ou isostéaryle, Z1' représente le radical acyle de formule R'2-C(=O)- tel que défini ci-dessus, avec Z1" identique ou différent de Z1, ou l'atome d'hydrogène, R3 représente l'atome d'hydrogène, le radical méthyle, ou le radical éthyle, y1 représente un nombre entier supérieur ou égal à 2 et inférieur ou égal à 20, v1, v2, v3, identiques ou différents, représentent un nombre entier supérieur ou égal à 0 et inférieur ou égal à 50, et la somme [(y1. v1) + (y1. v2) + v3)] est un nombre entier supérieur ou égal à 1 et inférieur ou égal à 50.

Comme tensioactif émulsionnant de type eau-dans-huile (S1), on peut citer par exemple les polyhydroxystéarates de polyglycols de formule (XXI) : 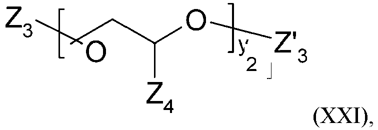 formule (XXI) dans laquelle y2 représente un nombre entier supérieur ou égal à 2 et inférieur ou égal à 50, Z4 représente l'atome d'hydrogène, le radical méthyle, ou le radical éthyle, Z3 représente un radical de formule (XXII) : 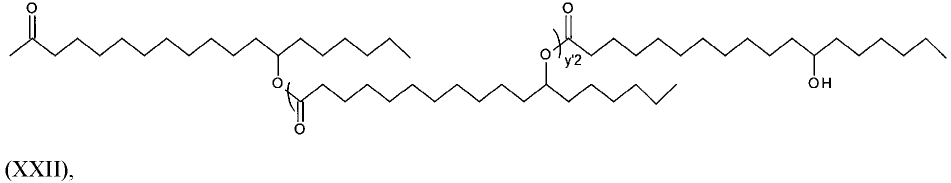 formule (XXII) dans laquelle y'2 représente un nombre entier supérieur ou égal à 0 et inférieur ou égal à 10, plus particulièrement supérieur ou égal à 1 et inférieur ou égal à 10 et Z'3 représente un radical de formule (XXII) telle que définie ci-dessus, avec Z3' identique ou différent de Z3, ou l'atome d'hydrogène.

Comme exemple de tensioactif émulsionnant de type eau-dans-huile de formule (XXI) que l'on peut utiliser pour préparer le système émulsionnant (S1), il y a le PEG-30 dipolyhydroxystéarate commercialisé sous le nom SIMALINE^{™} WO, ou bien les mélanges comprenant le PEG-30 dipolyhydroxystéarate et commercialisés sous les noms SIMALINE^{™}IE 201 A et SIMALINE^{™}IE 201 B, ou encore le mélange comprenant du Triméthylolpropane-30 tripolyhydroxystéarate commercialisé sous le nom SIMALINE^{™}IE 301 B.

Comme tensioactif émulsionnant de type eau-dans-huile (S1), on peut citer par exemple les polyhydroxystéarates de polyglycérol, représentés par la formule (XXIII) : 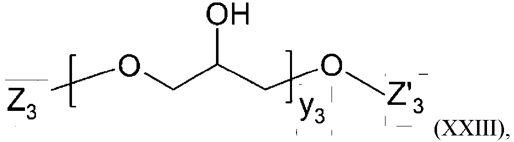 dans laquelle Z3 représente un radical de formule (XXIII) telle que définie ci-dessus, Z'3 représente un radical de formule (XXII) telle que définie ci-dessus, avec Z3' identique ou différent de Z3, ou l'atome d'hydrogène, y3 représente un nombre entier supérieur ou égal à 2 et inférieur ou égal à 20.

Comme tensioactif émulsionnant de type eau-dans-huile (S1), on peut citer par exemple les polyhydroxystéarates de polyglycérol alcoxylé, un composé représenté par la formule (XXIV): 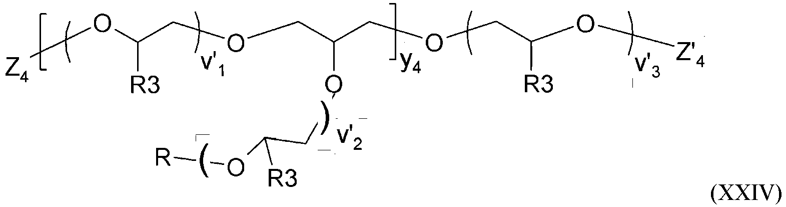 dans laquelle Z4 représente un radical de formule (XXII) telle que définie ci-dessus, Z'4 représente un radical de formule (XXII) telle que définie ci-dessus, avec Z4' identique ou différent de Z4, ou l'atome d'hydrogène, y4 représente un nombre entier supérieur ou égal à 2 et inférieur ou égal à 20, v'1, v'2, v'3, identiques ou différents, représentent un nombre entier supérieur ou égal à 0 et inférieur ou égal à 50, et la somme [(y4. v'1) + (y4. v'2) + v'3)] est un nombre entier supérieur ou égal à 1 et inférieur ou égal à 50.

Selon un autre aspect, dans l'étape g) du procédé objet de la présente invention, par "agent tensioactif émulsionnant de type huile dans eau (S2), on désigne un agent tensioactif émulsionnant possédant une valeur de HLB suffisamment élevée pour pour induire la formation d'une émulsion de type huile-dans-eau, à savoir une émulsion dans laquelle la phase organique huileuse sera dispersée et stabilisée dans la phase aqueuse.

Selon un autre aspect, dans l'étape g) du procédé objet de la présente invention, comme tensioactif de type huile dans eau (S2) on peut citer les "alcools gras polyéthoxylés" désignés par les composés de formule (XXV) :

R"-O-(CH2-CH2-O)_{n'}-OH (XXV),

avec R" représentant un radical hydrocarboné linéaire ou ramifié, saturé ou insaturé, pouvant porter des groupements hydroxyles, et comportant de six à vingt-deux atomes de carbone, et avec n' représentant un nombre entier supérieur ou égale à quatre et inférieur ou égale à cent.

Selon un aspect plus particulier, dans la formule (XXV), R" représente un radical hydrocarboné linéaire ou ramifié, saturé et comportant de dix à vingt-deux atomes de carbone.

Selon un aspect encore plus particulier, le composé de formule (XXV) est un alcool décylique linéaire éthoxylé avec six moles d'oxyde d'éthylène, un alcool décylique linéaire éthoxylé avec huit moles d'oxyde d'éthylène, un alcool laurique linéaire éthoxylé avec six moles d'oxyde d'éthylène, un alcool laurique linéaire éthoxylé avec sept moles d'oxyde d'éthylène, un alcool laurique linéaire éthoxylé avec huit moles d'oxyde d'éthylène, un alcool tridécylique linéaire éthoxylé avec six moles d'oxyde d'éthylène, un alcool tridécylique linéaire éthoxylé avec huit moles d'oxyde d'éthylène, un alcool tridécylique linéaire éthoxylé avec neuf moles d'oxyde d'éthylène.

Selon un autre aspect, dans l'étape g) du procédé objet de la présente invention, comme tensioactif de type huile dans eau (S2) on peut citer les esters d'hexitan polyéthoxylés, et particulièrement les esters de sorbitan polyéthoxylés, dont la chaîne aliphatique hydrocarbonée comporte de 12 à 22 atomes de carbone et dont le nombre de motifs d'oxyde d'éthylène est compris entre 5 et 40, par exemple l'oléate de sorbitan éthoxylé à 20 moles d'oxyde d'éthylène commercialisé sous le nom commercial Montanox^{™}80, ou le laurate de sorbitan éthoxylé à 20 moles d'oxyde d'éthylène commercialisé sous le nom commercial Montanox^{™}20.

Selon un autre aspect, dans l'étape g) du procédé objet de la présente invention, comme tensioactif de type huile dans eau (S2) on peut citer les compositions d'alkyl polyglycosides (C1) représentée par la formule (XXVI) :

R"1-O-(G)x-H (XXVI)

dans laquelle x, ou degré de polymérisation moyen, représente un nombre décimal compris entre 1,05 et 5, G représente le reste d'un sucre réducteur, et R"1 représente un radical aliphatique hydrocarboné, saturé ou insaturé, linéaire ou ramifié, éventuellement substitué avec un ou plusieurs groupe hydroxyle, comportant de 12 à 36 atomes de carbone, ladite composition (C1) consistant en un mélange de composés représentés par les formules (XXVI1), (XXVI2), (XXVI3), (XXVI4) et (XXVI5) :

R"1-O-(G)1-H (XXVI1)

R"1-O-(G)2-H (XXVI2)

R''1-O-(G)3-H (XXVI3)

R''1-O-(G)4-H (XXVI4)

R''1-O-(G)5-H (XXVI5)

dans les proportions molaires respectives a1, a2, a3, a4 et a5, telles que la somme a1+ a2 + a3 + a4 + a5 est égale à 1 et que
La somme a1 + 2a2 + 3a3 + 4a4 + 5a5 est égale à x.

Par radical aliphatique hydrocarboné, saturé ou insaturé, linéaire ou ramifié, comportant de 12 à 36 atomes de carbone, éventuellement substitué avec un ou plusieurs groupes hydroxyle, on désigne pour le radical R" 1 dans la formule (XXVI) telle que définie ci-dessus plus particulièrement le radical n-dodécyle, le radical n-tétradécyle, le radical n-hexadécyle, le radical n-octadécyle, le radical n-eicosyle, le radical n-docosyle, le radical 12-hydroxy octadécyle.

Par sucre réducteur, dans la définition de la formule (XXVI) telle que définie ci-dessus, on désigne les dérivés saccharidiques qui ne présentent pas dans leurs structures de liaison glycosidique établie entre un carbone anomérique et l'oxygène d'un groupement acétal tels qu'ils sont définis dans l'ouvrage de référence : « Biochemistry », Daniel Voet/Judith G. Voet, p. 250, John Wyley & Sons, 1990. La structure oligomérique (G)x, peut se présenter sous toutes formes d'isoméries, qu'il s'agisse d'isomérie optique, d'isomérie géométrique ou d'isomérie de position ; elle peut aussi représenter un mélange d'isomères.

Dans la formule (XXVI) telle que définie ci-dessus, le groupe R1-O- est lié à G par le carbone anomérique du reste saccharide, de manière à former une fonction acétal.

Selon un aspect particulier dans la définition de la formule (XXVI) telle que définie ci-dessus, G représente le reste d'un sucre réducteur choisi parmi le glucose, le dextrose, le saccharose, le fructose, l'idose, le gulose, le galactose, le maltose, l'isomaltose, le maltotriose, le lactose, le cellobiose, le mannose, le ribose, le xylose, l'arabinose, le lyxose, l'allose, l'altrose, le dextrane ou le tallose; et plus particulièrement G représente le reste d'un sucre réducteur choisi parmi les restes du glucose, du xylose et de l'arabinose.

Selon un aspect encore plus particulier, dans la définition de la formule (XXVI) x, ou degré moyen de polymérisation, représente un nombre décimal supérieur ou égal à 1,05 et inférieur ou égal à 2,5, plus particulièrement supérieur ou égal à 1,05 et inférieur ou égal à 2,0, et encore plus particulièrement supérieur ou égal à 1,25 et inférieur ou égal à 2,0.

Selon un autre aspect, dans l'étape g) du procédé objet de la présente invention, comme tensioactif de type huile dans eau (S2) on peut citer les compositions (C2) comprenant pour 100% de leur masse :
- De 10% à 50% massique, plus particulièrement de 15% à 40% massique, et encore plus particulièrement de 20% à 30% massique, d'au moins une composition (C1) représentée par la formule (XXVI) telle que définie précédemment,
- De 90% à 50% massique, plus particulièrement de 85% à 60% massique, et encore plus particulièrement de 80% à 70% massique, d'au moins un alcool gras de formule (XXVII) :

   R‴1-OH (XXVII),

   dans laquelle R‴1, identique ou différent de R"1, représente un radical aliphatique hydrocarboné, saturé ou insaturé, linéaire ou ramifié, éventuellement substitué avec un ou plusieurs groupe hydroxyle, comportant de 12 à 36 atomes de carbone, et de préférence de 12 à 22 atomes de carbone.

Comme tensioactif émulsionnant de type huile-dans-eau (S2), on peut citer par exemple les esters de polyglycérol de formule (XXVIII) :

R12-(C=O)-[O-CH2-CH(OH)-CH2]p12-OH (XXVIII),

formule (XVIII) dans laquelle p12 représente un nombre entier supérieur ou égal à un et inférieur ou égal à quinze ; et dans laquelle le groupe R1-(C=O)- représente un radical aliphatique saturé ou insaturé, linéaire ou ramifié, comportant de six à vingt-deux atomes de carbone.

Comme tensioactif émulsionnant de type huile-dans-eau (S2), on peut citer par exemple les compositions (C13) comprenant pour 100% de leurs masses :
- De 10% massique à 60% massique d'au moins un composé de formule (XXIX) :

   HO-[CH2-CH(OH)-CH2-O] n12-H (XXIX)

   formule (I) dans laquelle n12 représentant un nombre entier supérieur ou égal à un et inférieur ou égal à quinze ; et
- De 40% massique à 90% massique d'au moins un composé de formule (XXVIII) telle que définie précédemment.

La présente invention a également pour objets :
- l'utilisation de ladite composition aqueuse liquide phytosanitaire (F) telle que définie précédemment, pour prévenir et/ou traiter les plantes susceptibles d'être affectées ou affectées par une maladie fongique et/ou par des plantes parasites et/ou par une maladie bactérienne et/ou par des insectes ; et
- un procédé de traitement d'une plante caractérisé en ce qu'il comprend au moins une étape d'application de la composition phytosanitaire (F) telle que définie précédemment sur la plante par aspersion et/ou par pulvérisation et/ou par arrosage et/ou sous toute autre forme permettant ladite application.

Selon un aspect particulier, ladite utilisation consiste à épaissir des phases polaires comme par exemple les phases aqueuses, alcooliques ou hydro-alcooliques ou les phases polaires comprenant des polyols tels que le glycérol.

Selon un autre aspect particulier, ladite utilisation consiste à stabiliser une émulsion de type huile-dans-eau, ou de type eau-dans-huile, en conférant un aspect homogène à ladite émulsion pendant le stockage dans différentes conditions, et plus particulièrement à 25°C pendant une durée au moins égale à un mois, et plus particulièrement à 4°C pendant une durée au moins égale à un mois, et plus particulièrement à 45°C pendant une durée au moins égale à un mois.

Selon un autre aspect particulier, ladite utilisation consiste à stabiliser des particules solides dans des compositions phytosanitaires (F).

Ces particules solides à suspendre peuvent revêtir différentes géométries, régulières ou irrégulières, et se présenter sous forme de perles, de billes, de tiges, de paillettes, de lamelles ou de polyèdres. Ces particules solides se caractérisent par un diamètre moyen apparent compris entre un micromètre et cinq millimètres, plus particulièrement entre dix micromètres et un millimètre.

Parmi les particules solides qui peuvent être mises en suspension et stabilisées par l'acide gamma-poly(glutamique) (PGGA) sous forme acide, ou partiellement ou totalement salifié tel que défini précédemment dans des compositions phytosanitaire, il y a les micas, l'oxyde de fer, l'oxyde de titane, l'oxyde de zinc, l'oxyde d'aluminium, le talc, la silice, le kaolin, les argiles, le nitrure de bore, le carbonate de calcium, le carbonate de magnésium, l'hydrogénocarbonate de magnésium, les pigments colorés inorganiques, les polyamides comme le nylon-6, les polyéthylènes, les polypropylènes, les polystyrènes, les polyesters, les polymères acryliques ou méthacryliques comme les polyméthylméthacrylates, le polytétrafluoroéthylène, les cires cristallines ou microcristallines, des sphères poreuses, le sulphide de sélénium, le pyrithione de zinc, les amidons, les alginates, les fibres de végétaux, les particules de Loofah, les particules d'éponges.

Ladite composition phytosanitaire (F), objet de la présente invention se présente notamment sous la forme d'une solution aqueuse, d'une émulsion ou d'une microémulsion à phase continue aqueuse, d'une émulsion ou d'une microémulsion à phase continue huileuse, d'un gel aqueux, d'une mousse, ou encore sous la forme d'un aérosol. Elle peut être appliquée directement sur la surface de la peau ou bien par l'intermédiaire de tout type de support destiné à être mis en contact avec la surface de la peau (papier, lingette, textile).

De façon générale, ladite composition phytosanitaire (F) objet de la présente invention, comporte en outre au moins un ou plusieurs composés auxiliaires choisi parmi les phases grasses, les tensioactifs moussants et/ou détergents, les tensioactifs épaississants et/ou gélifiants, les agents épaississants et/ou gélifiants, les agents stabilisants, les composés filmogènes, les solvants et co-solvants, les agents hydrotropes, les agents plastifiants, les agents opacificants, les agents nacrants, les agents surgraissants, les séquestrants, les agents chélatants, les agents antioxydants, les parfums, les huiles essentielles, les agents conservateurs, les agents conditionneurs.

De manière générale, la composition phytosanitaire (F) selon l'invention peut comprendre des excipients et/ou des principes actifs habituellement mis en œuvre dans le domaine des formulations, en particulier phytosanitaire.

Parmi les phases grasses présentes dans la composition phytosanitaire (F) selon l'invention, on peut citer les huiles et les cires.

Par huile, on désigne un composé et/ou un mélange de composés insoluble dans l'eau, et liquide à 25°C, et plus particulièrement les huiles précédemment décrite ci-dessus.

Parmi les phases grasses que l'on peut associer à la composition phytosanitaire (F) selon l'invention, on peut citer les cires. Ces dernières sont plus particulièrement choisies parmi la cire d'abeille, la cire de carnauba, la cire de candelilla, la cire d'ouricoury, la cire du Japon, la cire de fibre de liège, la cire de canne à sucre, les cires de paraffines, les cires de lignite, les cires microcristallines, la cire de lanoline; l'ozokérite; la cire de polyéthylène; les cires de silicone ; les cires végétales ; les alcools gras et les acides gras solides à température ambiante; les glycérides solides à température ambiante.

Concernant les composés auxiliaires, parmi les tensioactifs anioniques moussants et/ou détergents que l'on peut associer à la composition phytosanitaire (F) selon l'invention, on peut citer les sels de métaux alcalins, les sels de métaux alcalino-terreux, les sels d'ammonium, les sels d'amines, les sels d'amino alcools d'alkyléthers sulfates, d'alkyl sulfates, d'alkylamidoéther sulfates, d'alkylarylpolyéther sulfates, de monoglycérides sulfates, d'alphaoléfinesulfonates, de paraffines sulfonates, d'alkyl phosphates, d'alkyléther phosphates, d'alkyl sulfonates, d'alkylamide sulfonates, d'alkylaryl sulfonates, d'alkyl carboxylates, d'alkylsulfosuccinates, d'alkyléther sulfosuccinates, d'alkylamide sulfosuccinates, d'alkyl sulfo-acétates, d'alkyl sarcosinates, d'acyliséthionates, de N-acyl taurates, d'acyl lactylates, de dérivés N-acylés d'acides aminés, de dérivés N-acylés de peptides, de dérivés N-acylés de protéines, d'acides gras.

Parmi les tensioactifs amphotères moussants et/ou détergents éventuellement présents dans la composition phytosanitaire (F) selon l'invention, on peut citer les alkylbétaines, les alkylamidobétaines, les sultaines, les alkylamidoalkylsulfobétaines, les dérivés d'imidazolines, les phosphobétaïnes, les amphopolyacétates et les amphopropionates.

Parmi les tensioactifs cationiques moussants et/ou détergents éventuellement présents dans la composition phytosanitaire (F) selon l'invention, on peut citer particulièrement les dérivés d'ammoniums quaternaires.

Parmi les tensioactifs non ioniques moussants et/ou détergents éventuellement présents dans la composition (F) selon l'invention, on peut citer plus particulièrement les alkylpolyglycosides comportant un radical aliphatique, linéaire ou ramifié, saturé ou insaturé, et comportant de 8 à 12 atomes de carbone ; les dérivés d'huile de ricin, les polysorbates, les amides de coprah, les N-alkylamines.

Comme exemples de tensioactifs épaississants et/ou gélifiants éventuellement présents dans la composition phytosanitaire (F) selon l'invention, on peut citer :
- les esters gras d'alkylpolyglycosides éventuellement alcoxylés, et tout particulièrement les esters de méthylpolyglucoside éthoxylés tels que le PEG 120 méthyl glucose trioléate et le PEG 120 méthyl glucose dioléate commercialisés respectivement sous les appellations GLUCAMATE^{™} LT et GLUMATE^{™} DOE120 ;
- les esters gras alcoxylés tels que le PEG 150 pentaérythrytyl tétrastéarate commercialisé sous l'appellation CROTHIX^{™} DS53, le PEG 55 propylene glycol oléate commercialisé sous l'appellation ANTIL^{™} 141 ;
- les carbamates de polyalkylène glycols à chaînes grasses tels que le PPG 14 laureth isophoryl dicarbamate commercialisé sous l'appellation ELFACOS^{™} T211, le PPG 14 palmeth 60 hexyl dicarbamate commercialisé sous l'appellation ELFACOS^{™} GT2125.

Comme exemples de tensioactifs émulsionnants éventuellement présents dans la composition phytosanitaire (F) selon l'invention, on peut citer des tensioactifs non ioniques, des tensioactifs anioniques, des tensioactifs cationiques.

Comme exemples de tensioactifs non ioniques émulsionnants éventuellement présents dans la composition phytosanitaire (F) selon l'invention, l'huile de ricin éthoxylée et l'huile de ricin hydrogénée éthoxylée, par exemple le produit commercialisé sous la dénomination SIMULSOL^{™} 989; les compositions comprenant du stéarate de glycérol et de d'acide stéarique poly(éthoxylé) avec entre 5 moles et 150 moles d'oxyde d'éthylène, par exemple la composition comprenant de l'acide stéarique (éthoxylé) à 135 moles d'oxyde d'éthylène et du stéarate de glycérol commercialisée sous l'appellation SIMULSOL^{™} 165 ; les esters de sorbitan éthoxylés, par exemple les produits commercialisés sous la dénomination MONTANOX^{™} ; les esters de mannitan éthoxylés ; les esters de sucrose ; les esters de méthylglucoside.

Comme exemples de tensioactifs anioniques émulsionnants éventuellement présents dans la composition phytosanitaire (F) selon l'invention, on peut citer le décylphosphate, le cétylphosphate commercialisé sous l'appellation AMPHISOL^{™}, le glycéryl stéarate citrate ; le cétéarylsulfate ; la composition arachidyl/béhényl phosphates et arachidyl/béhényl alcools commercialisée sous l'appellation SENSANOV^{™}WR; les savons par exemple le stéarate de sodium ou le stéarate de triéthanolammonium, les dérivés N-acylés d'acides aminés salifiés comme par exemple le stéaroyl glutamate.

Comme exemples de tensioactifs cationiques émulsionnants éventuellement présents dans la composition phytosanitaire (F) selon invention, on peut citer les aminoxydes, le quaternium-82, le cétyl triméthyl ammonium chloride, l'hexadécyl triméthyl ammonium bromide, le cétyl pyridinium chloride, benzalkonium chloride, le benzethonium chloride, et les tensioactifs décrits dans le document WO96/00719 et principalement ceux dont la chaîne grasse comprend au moins 16 atomes de carbone.

Comme exemples d'agents opacifiants et/ou nacrants éventuellement présents dans la composition phytosanitaire (F) selon l'invention, on peut citer le palmitate de sodium, le stéarate de sodium, l'hydroxystéarate de sodium, le palmitate de magnésium, le stéarate de magnésium, l'hydroxystéarate de magnésium, le monostéarate d'éthylène glycol, le distéarate d'éthylène glycol, le monostéarate de polyéthylène glycol, le distéarate de polyéthylène glycol, les alcools gras comportant de 12 à 22 atomes de carbone.

Comme exemples de solvants et de co-solvants éventuellement présents dans la composition phytosanitaire (F) selon l'invention, on peut citer l'eau, les solvants organiques par exemple le glycérol, le diglycérol, les oligomères du glycérol, l'éthylène glycol, le propylène glycol, le butylène glycol, l'hexylène glycol, le diéthylène glycol, le xylitol, l'érythritol, le sorbitol, les alcools hydrosolubles tels que l'éthanol, l'isopropanol ou le butanol, les mélanges d'eau et desdits solvants organiques, le propylène carbonate, l'acétate d'éthyle, l'alcool benzylique, le diméthylsulfoxyde (DMSO).

Comme exemples d'agents épaississants et/ou gélifiants éventuellement présents dans la composition phytosanitaire (F) selon l'invention, on peut citer les polysaccharides constitués uniquement d'oses, comme les glucanes ou homopolymères du glucose, les glucomannoglucanes, les xyloglycanes, les galactomannanes dont le degré de substitution (DS) des unités de D-galactose sur la chaîne principale de D-mannose est compris entre 0 et 1, et plus particulièrement entre 1 et 0,25, comme les galactomannanes provenant de la gomme de cassia (DS = 1/5), de la gomme de caroube (DS = 1/4), de la gomme de tara (DS = 1/3), de la gomme de guar (DS = 1/2), de la gomme de fenugrec (DS = 1).

Comme exemples d'agents épaississants et/ou gélifiants éventuellement présents dans la composition phytosanitaire (F) selon l'invention, on peut citer les polysaccharides constitués de dérivés d'oses, comme les galactanes sulfatés et plus particulièrement les carraghénanes et l'agar, les uronanes et plus particulièrement les algines, les alginates et les pectines, les hétéropolymères d'oses et d'acides uroniques et plus particulièrement la gomme xanthane, la gomme gellane, les exsudats de gomme de arabique et de gomme de karaya, les glucosaminoglycanes.

Comme exemples d'agents épaississants et/ou gélifiants éventuellement présents dans la composition phytosanitaire (F) selon l'invention, on peut citer la cellulose, les dérivés de cellulose comme la méthyl-cellulose, l'éthyl-cellulose, l'hydroxypropyl cellulose, les silicates, l'amidon, les dérivés hydrophiles de l'amidon, les polyuréthanes.

Comme exemples d'agents stabilisants éventuellement présents dans la composition phytosanitaire (F) selon l'invention, on peut citer les cires microcristallines, et plus particulièrement l'ozokérite, les sels minéraux tels que le chlorure de sodium ou le chlorure de magnésium.

Comme exemples d'agents antisectides que l'on peut associer à la composition phytosanitaire (F) selon l'invention, on peut citer le trichlorfone, le triflumerone, le fenthion, le bendiocarbe, la cyromazine, le dislubenzurone, le dicyclanile, le fluazurone, l'amitraze, la deltamethrine, la cypermethrine, le chlorfenbinphose, la flumethrine, la ivermectine, l'abermectine, l'avermectine, la doramectine, la moxidectine, la zeti-cypermethrine, la diazinone, la spinosade, l'imidaclopride, le nitenpyrane, le pyriproxysene, le sipronil, le cythioate, la lufenurone, la selamectine, la milbemycine oxime, le chlorpyrifose, le coumaphose, le propetamphose, l'alpha-cypermethrine, l'highciscypermethrine, l'ivermectine, la diflubenzurone, le cyclodiene, le carbamate and benzoyl urée.

Comme exemples d'agents anti-microbiens que l'on peut associer à la composition phytosanitaire (F) selon l'invention, on peut citer les sulfonamides, les aminoglycosides comme par exemple le neomycine, le tobramycine, le gentamycine, l'amikacine, le kanamycine, le spectinomycine, le paromomycine, le netilmicin, les polypeptides, les cephalosporines, les oxazolidinones comme par exemple la ciprofloxacine, la levofloxacine, l'ofloxacine.

Les exemples suivants illustrent l'invention sans toutefois la limiter.

### Exemple 1 : Préparation d'une émulsion eau dans huile concentrée selon l'invention, composée d'alcanes C15-19 en tant que phase grasse et de PGGA de sodium réticulé par du 1,4-butanediol diglycidyl ether en phase aqueuse (pH = 5,5 à 6,0)

Le procédé de synthèse comprend les étapes suivantes :
- Etape a) : Réalisation d'un gel de PGGA de sodium :
   - 110 grammes d'eau déminéralisée sont placés sous agitation mécanique procurée par un agitateur de marque Rayneri^{™} équipé d'un mobile de type défloculeuse.
   - 30 grammes de PGGA de sodium commercialisé sous le nom de marque "PolyGammaGlutamate de grade cosmétique" par la société LUBON sont ajoutés lentement dans le vortex.
- Etape b) : Ajustement du pH du milieu réactionnel entre 5,5 et 6 à une température de 20°C à l'aide d'une solution d'HCl 5M.
- Etape c) : Ajout de 0,45 grammes de 1,4-Butanediol diglycidyl ether (commercialisé sous le nom d'ERISYS^{™} GE 21 par la société EMERALD) à la phase aqueuse préparée à l'étape b)
- Etape d) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls^{™} PGPH par la société BASF)
   - Peser 20 grammes de C15-19 Alcane (commercialisé sous le nom d'EMOGREEN^{™} L19 par la société SEPPIC)
   - Peser 30 grammes de C11-12 Isoparaffine (commercialisé sous le nom d'ISOPAR H par la société ExxonMobil Chemical) ; Homogénéiser la phase organique par mélange à l'aide d'une agitateur magnétique et d'un barreau aimanté.
- Etape e) : Pré-émulsification : Ajout de la phase organique préparée à l'étape d) sur la phase aqueuse préparée à l'étape c) sous agitation mécanique procurée par un agitateur de marque RayneriTM équipé d'un mobile de type défloculeuse.
- Etape f) : Emulsification cisaillante procurée par un système de type rotor-stator par le mélangeur de marque Silverson^{™} L4RT pendant 2 minutes à une vitesse de 7500 tours/min.
- Etape g) : Distillation sous vide dans un réacteur sous vide partiel de l'huile légère et de l'eau.
- Etape h) : Ajout d'un tensioactif de type huile-dans-eau sur l'émulsion concentrée obtenue à l'étape h) : pesée de 8 grammes d'émulsion concentrée et ajout de 2 grammes de Polyglycéryl-6 laurate ;
   Agitation du mélange et obtention d'une composition (E1)

### Exemple 2 : Préparation d'une émulsion eau dans huile concentrée selon l'invention, composée d'éthyl hexyl palmitate en tant que phase grasse et de PGGA de sodium, réticulé par du 1,4-butanediol diglycidyl ether en phase aqueuse (pH = 5,5 à 6,0)

Le procédé de synthèse comprend les étapes suivantes :
- Etape a) : Réalisation d'un gel de PGGA de sodium :
   - 120 grammes d'eau déminéralisée sont placés dans un bécher sous agitation procurée par un agitateur mécanique de marque RayneriTM équipé d'un mobile de type défloculeuse.
   - 20 grammes de PGGA de sodium, commercialisé sous le nom de marque "PolyGammaGlutamate de grade cosmétique". par la société LUBON,sont ajoutés lentement dans le vortex.
- Etape b) : Ajout de 0,50 grammes de 1,4-Butanediol diglycidyl ether (commercialisé sous le nom d'ERISYS^{™} GE 21 par la société EMERALD) à la phase aqueuse préparée à l'étape a) ;
- Etape c) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls^{™} PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR H par la société ExxonMobil Chemical) ; Homogénéiser la phase organique par mélange à l'aide d'un agitateur magnétique et d'un barreau aimanté.
- Etape d) : Pré-émulsification : Ajout de la phase organique préparée à l'étape c) sur la phase aqueuse préparée à l'étape b) sous agitation mécanique procurée par un agitateur de marque Rayneri^{™} équipé d'un mobile de type défloculeuse.
- Etape e) : Emulsification cisaillante avec un dispositif de type rotor-stator de marque Silverson^{™} L4RT pendant 2 minutes à une vitesse de 7500 tours/min.
- Etape f) : Distillation sous vide, dans un réacteur mis sous vide partiel, de l'huile légère et de l'eau.
- Etape g) : Ajout de tensioactif de type huile-dans-eau à l'émulsion concentrée obtenue à l'étape f) : pesée de 8 grammes d'émulsion concentrée obtenue à l'étape f) et ajout de 2 grammes de Polygycéryl-6 laurate ;
   Le mélange est homogénéisé à température ambiante sous agitation mécanique à vitesse modérée pour obtenir la composition (E2).

### Exemple 3 : Préparation d'une émulsion eau dans huile concentrée selon l'invention, composée d'un mélange éthyl hexyl palmitate / alcanes C15-19 en tant que phase grasse et de PGGA de sodium,réticulé par du 1,4-butanediol diglycidyl ether en phase aqueuse (pH = 5,5 à 6,0)

Le procédé de synthèse comprend les étapes suivantes :
- Etape a) : Réalisation d'un gel de PGGA de sodium :
   - 100 grammes d'eau déminéralisée sont placés dans un bécher sous agitation procurée par un agitateur mécanique de marque Rayneri^{™} équipé d'un mobile de type défloculeuse.
   - 30 grammes de PGGA , commercialisé sous le nom de marque "PolyGammaGlutamate de sodium de grade cosmétique" par la société LUBON sont ajoutés lentement dans le vortex.
- Etape b) : Ajustement du pH du milieu réactionnel entre 5,5 et 6 à une température de 20°C à l'aide d'une solution d'HCl 5M.
- Etape c) : Ajout de 0,75 grammes de 1,4-Butanediol diglycidyl ether (commercialisé sous le nom d'ERISYS^{™} GE 21 par la société EMERALD) à la phase aqueuse préparée à l'étape b)
- Etape d) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls^{™} PGPH par la société BASF)
   - Peser 10 grammes d'éthyl hexyl palmitate (commercialisé sous le nom de DUB PO par la société stéarinerie dubois)
   - Peser 10 grammes C15-19 Alcane (commercialisé sous le nom d'EMOGREEN^{™} L19 par la société SEPPIC)
   - Peser 30 grammes de C11-12 Isoparaffine (commercialisé sous le nom d'ISOPAR^{™} H par la société ExxonMobil Chemical) ;
      le mélange obtenu est agité par l'intermédiaire d'un agitateur magnétique et d'un barreau aimanté.
- Etape e) : Pré-émulsification : Ajout de la phase organique préparée à l'étape d) sur la phase aqueuse préparée à l'étape c) sous agitation mécanique à l'aide d'un agitateur de marque Rayneri^{™} équipé d'un mobile de type défloculeuse.
- Etape f) : Emulsification par agitation cisaillante avec un dispositif de type rotor-stator avec un agitateur de marque Silverson^{™} L4RT pendant 2 minutes à 7500 tour/min.
- Etape g) : Distillation sous vide dans un réacteur sous vide partiel de l'huile légère et de l'eau.
- Etape h) : Ajout d'un tensioactif de type huile-dans-eau à l'émulsion concentrée obtenue à l'étape g) : pesée de 8 grammes d'émulsion concentrée obtenue à l'étape g) et de 2 grammes de polyglycéryl-6 laurate.
   Le mélange est homogénéisé à température ambiante sous agitation mécanique à vitesse modérée pour obtenir la composition (E₃).

### Exemple 4 : Préparation d'une émulsion eau dans huile concentrée selon l'invention, composée d'éthyl hexyl palmitate en tant que phase grasse et de PGGA de sodium réticulé par du 1,4-butanediol diglycidyl ether en phase organique (pH = 5,5 à 6,0) (réticulant en phase grasse)

Le procédé de synthèse comprend les étapes suivantes :
- Etape a) : Réalisation d'un gel de PGGA de sodium ) :
   - 120 grammes d'eau déminéralisée sont placés dans un bêcher sous agitation mécanique à l'aide d'un agitateur de marque Rayneri ^{™} équipé d'un mobile de type défloculeuse.
   - 20 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel entre 5,5 et 6 à une température de 20°C à l'aide d'une solution de NaOH 4M.
- Etape c) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de de Polyglycéryl-2 Dipolyhydroxystéarate (commercialisé sous le nom de Dehymuls^{™} PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR H par la société ExxonMobil Chemical)
   - Peser 0,50 grammes de 1,4-Butanediol diglycidyl ether (commercialisé sous le nom d'ERISYS GE 21 par la société EMERALD) ;
      Agiter le mélange des ingrédients précédemment pesés sous agitation magnétique à l'aide d'un barreau aimanté.
- Etape d) : Pré-émulsification : Ajout de la phase organique préparée à l'étape c) sur la phase aqueuse préparée à l'étape b) sous agitation mécanique à l'aide d'un agitateur mécanique de marque Rayneri^{™} équipé d'un mobile de type défloculeuse.
- Etape e) : Emulsification cisaillante avec un agitateur muni d'un système rotor-stator Silverson^{™} L4RT pendant 2 min à une vitesse de 7500 tours/min
- Etape f) : Distillation sous vide dans un réacteur sous vide partiel de l'huile légère et de l'eau.
- Etape g) : Ajout de tensioactif huile-dans-eau dans l'émulsion concentrée obtenu à l'étape f) : pesée de 8 grammes d'émulsion concentrée et de 2 grammes de Polyglycéryl-6 laurate, qui sont ajoutés au mélange obtenu à l'étape f).
   Le mélange est homogénéisé à température ambiante sous agitation mécanique à vitesse modérée pour obtenir la composition (E4).

### Exemple 5 : Préparation d'une émulsion eau dans huile concentrée selon l'invention, composée d'éthyl hexyl palmitate en tant que phase grasse et de PGGA de Na réticulé par du 1,4-butanediol diglycidyl ether en phase aqueuse (pH = 4)

Le procédé de synthèse comprend les étapes suivantes :
- Etape a) : Réalisation d'un gel de PGGA de sodium :
   - 120 grammes d'eau déminéralisée sont placés dans un bécher sous agitation mécanique à l'aide d'un agitateur de marque RayneriTM équipé d'un mobile de type défloculeuse.
   - 20 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel à 4 à une température de 20°C à l'aide d'une solution de HCl 5M.
- Etape c) : Ajout de 0,50 grammes de 1,4-Butanediol diglycidyl ether (commercialisé sous le nom d'ERISYS^{™} GE 21 par la société EMERALD) à la phase aqueuse préparée à l'étape b)
- Etape d) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR H par la société ExxonMobil Chemical) ;
      Introduire chacun des ingrédients dans le bécher et agiter le mélange avec un agitateur mécanique muni d'un barreau aimanté.
- Etape e) : Pré-émulsification : Ajout de la phase organique préparée à l'étape d) sur la phase aqueuse préparée à l'étape c) sous agitation mécanique avec l'agitateur de marque RayneriTM équipé d'un mobile de type défloculeuse.
- Etape f) : Emulsification cisaillante au Silverson^{™} L4RT, pendant 2 minutes à une vitesse de 7500 tours/min.
- Etape g) : Distillation sous vide dans un réacteur sous vide partiel de l'huile légère et de l'eau.
   - Etape h) : Ajout de tensioactif eau-dans-huile dans à l'émulsion concentrée obtenue à l'étape g) : pesée de 8 grammes d'émulsion concentrée obtenue à l'étape eg) et ajout de 2 grammes de Polyglycéryl-6 laurate ; Le mélange est homogénéisé à température ambiante sous agitation mécanique à vitesse modérée pour obtenir la composition (E5).

### Exemple 6 : Préparation d'une émulsion eau dans huile concentrée selon l'invention, composée d'éthyl hexyl palmitate en tant que phase grasse et de PGGA de sodium réticulé par du 1,4-butanediol diglycidyl ether en phase aqueuse (pH = 10)

Le procédé de synthèse comprend les étapes suivantes :
- Etape a) : Réalisation d'un gel de PGGA de sodium :
   - 120 grammes d'eau déminéralisée sont placés sous agitation mécanique à l'aide d'un agitateur de marque Rayneri^{™} équipé d'un mobile de type défloculeuse.
   - 20 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel à 10 à une température de 20°C à l'aide d'une solution de NaOH 4M.
- Etape c) : Ajout de 0,50 grammes de 1,4-Butanediol diglycidyl ether (commercialisé sous le nom d'ERISYS^{™} GE 21 par la société EMERALD) à la phase aqueuse préparée à l'étape b)
- Etape d) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls^{™} PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR H par la société ExxonMobil Chemical) ;
      Mélanger les différents ingrédients et agiter le mélange à l'aide d'un agitateur magnétique muni d'un barreau aimanté.
- Etape e) : Pré-émulsification : Ajout de la phase organique préparée à l'étape d) sur la phase aqueuse préparée à l'étape c) sous agitation mécanique avec un agitateur de marque RayneriTM équipé d'un mobile de type défloculeuse.
- Etape f) : Emulsification cisaillante avec un agitateur de marque SilversonTM L4RT pendant 2 minutes à une vitesse de 7500 tours/min.
- Etape g) : Distillation sous vide (soit avec un rotavapor + ballon, soit dans un réacteur sous vide) de l'huile légère et de l'eau.
- Etape h) : Ajout de tensioactif huile-dans-eau à l'émulsion concentrée obtenue à l'étape g) : pesée de 8 grammes d'émulsion concentrée obtenue à l'étape g) et de 2 grammes de Ppolyglycéryl-6 laurate ;
   Le mélange est homogénéisé à température ambiante sous agitation mécanique à vitesse modérée pour obtenir la composition (E6).

### Exemple 7 : Préparation d'une émulsion eau dans huile concentrée selon l'invention, composée d'éthyl hexyl palmitate en tant que phase grasse et de PGGA de sodium réticulé par du 1,4-butanediol diglycidyl ether et linonhilisé par du C12-14 glycidyl ether en phase aqueuse (pH = ?)

Le procédé de synthèse comprend les étapes suivantes :
- Etape a) : Réalisation d'un gel de PGGA de sodium :
   - 120 grammes d'eau déminéralisée sont placés dans un bécher sous agitation mécanique avec un agitateur de marque Rayneri^{™} équipé d'un mobile de type défloculeuse.
   - 20 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel entre 5,5 et 6 à une température de 20°C à l'aide d'une solution de NaOH 4M.
- Etape c) Ajout de 0,5 grammes de 1,4-Butanediol diglycidyl ether (commercialisé sous le nom d'ERISYS^{™} GE 21 par la société EMERALD) à la phase aqueuse préparée à l'étape b)
- Etape d) : Ajout de 2,0 grammes de C12-C14 glycidyl ether (commercialisé sous le nom d'ERISYS^{™} GE 08 de chez EMERALD) à la phase aqueuse préparée à l'étape c)
- Etape e) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls^{™} PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR^{™} H par la société ExxonMobil Chemical) ;
      Agiter le mélange des ingrédients avec un agitateur magnétique muni d'un barreau aimanté.
- Etape f) : Pré-émulsification : Ajout de la phase organique préparée à l'étape e) sur la phase aqueuse préparée à l'étape d) sous agitation mécanique avec un agitateur de marque Rayneri^{™} équipé d'un mobile de type défloculeuse.
- Etape g) : Emulsification cisaillante avec un agitateur de marque Silverson^{™} L4RT pendant 2 minutes à une vitesse de 7500 tours/min.
- Etape h) : Distillation sous vide dans un réacteur sous vide partiel de l'huile légère et de l'eau.
- Etape i) : Ajout de tensioactifs huile-dans-eau à l'émulsion concentrée obtenue à l'étape g): pesée de 8 grammes d'émulsion concentrée obtenue à l'étape h) et de 2 grammes de Polyglycéryl-6 laurate ;
   Le mélange est homogénéisé à température ambiante sous agitation mécanique à vitesse modérée pour obtenir la composition (E7).

### Exemple 8 : Préparation d'une émulsion eau dans huile concentrée selon l'invention, composée d'éthyl hexyl palmitate en tant que phase grasse et de PGGA de sodium réticulé par du triméthylol éthane triglycidyl ether en phase aqueuse (pH = 6,0)

Le procédé de synthèse comprend les étapes suivantes :
- Etape a) : Réalisation d'un gel de PGGA de sodium :
   - 120 grammes d'eau déminéralisée sont placés sous agitation mécanique avec un agitateur de marque Rayneri^{™} équipé d'un mobile de type défloculeuse.
   - 20 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel entre 5,5 et 6,0 à une température de 20°C à l'aide d'une solution de NaOH 4M.
- Etape c) : Ajout de 0,5 grammes de Triméthylol éthane triglycidyl ether (commercialisé sous le nom d'ERISYS^{™} GE 31 par la société EMERALD) à la phase aqueuse préparée à l'étape b)
- Etape d) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls^{™} PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR^{™} H par la société ExxonMobil Chemical) ;
      Agiter le mélange de l'ensemble des ingrédients avec un agitateur magnétique muni d'un barreau aimanté.
- Etape e) : Pré-émulsification : Ajout de la phase organique préparée à l'étape d) sur la phase aqueuse préparée à l'étape c) sous agitation mécanique avec un agitateur de marque Rayneri^{™} équipé d'un mobile de type défloculeuse.
- Etape f) : Emulsification cisaillante avec un agitateur de marque Silverson^{™} L4RT pendant 2 minutes à une vitesse de 7500 tours/min.
- Etape g) : Distillation sous vide dans un réacteur sous vide partiel de l'huile légère et de l'eau.
- Etape h) : Ajout de tensioactifs huile-dans-eau à l'émulsion concentrée obtenue à l'étape g) : pesée de 8 grammes d'émulsion concentrée obtenue à l'étape f) et de 2 grammes de Polyglycéryl-6 laurate ;
   Le mélange est homogénéisé à température ambiante sous agitation mécanique à vitesse modérée pour obtenir la composition (E8).

### Exemple 9 : Préparation d'un latex inverse concentré de PGGA(Na) réticulé selon l'invention dans l'octyl palmitate

Le procédé de synthèse comprend les étapes suivantes :
- Etape a) : Réalisation d'un gel de PGGA de sodium avec un agitateur mécanique de marque au Rayneri^{™} muni d'un mobile de type défloculeuse :
   - 110 grammes d'eau déminéralisée sont placés sous agitation dans un bécher et agités avec un agitateur mécanique de marque RayneriTM équipé d'un mobile de type défloculeuse.
   - 30 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel à 5,5 - 6 à une température de 20°C à l'aide d'une solution de HCl 5M.
- Etape c) : Ajout de 0,72 grammes de 1,4-Butanediol diglycidyl ether (commercialisé sous le nom d'ERISYS^{™} GE 21 par la société EMERALD) à la phase aqueuse préparée à l'étape b)
- Etape d) : Préparation de la phase organique dans un bécher de 100 grammes :
   - Peser 5 grammes d'isostéarate de sorbitan (commercialisé sous le nom de MONTANE^{™}70 par la société SEPPIC)
   - Peser 3 grammes d'un mélange constitué de diéthanolamide de tall-oil commercialisé sous le nom de marque SIMALINE^{™} IE 200 par la société SEPPIC.
   - Peser 2 grammes d'un tensioactif polymérique commercialisé sous le nom de marque Hypermer^{™} 6212 par la société Croda
   - Peser 50 grammes de C11-12 Isoparaffine (commercialisé sous le nom d'ISOPAR^{™} H par la société ExxonMobil Chemical) ;
      Agiter le mélange de l'ensemble des ingrédients à l'aide d'un agitateur magnétique muni d'un barreau aimanté.
- Etape e) : Pré-émulsification : Ajout de la phase organique préparée à l'étape d) sur la phase aqueuse préparée à l'étape c) sous agitation mécanique par un agitateur de marque Rayneri^{™} équipé d'un mobile de type défloculeuse.
- Etape f) : Emulsification cisaillante avec un agitateur mécanique de marque Silverson^{™} L4RT pendant 2 minutes à une vitesse de 7500 tours/min.
- Etape g) : Distillation sous vide dans un réacteur sous vide partiel de l'huile légère et de l'eau.
- Etape h) : Ajout de tensioactif huile-dans-eeau à l'émulsion concentrée obtenue à l'étape g) : pesée de 8 grammes d'émulsion concentrée et de 1 gramme de polysorbate 80 (commercialisé sous le nom MONTANOX^{™} 80 par la société SEPPIC ;
   Le mélange est homogénéisé à température ambiante sous agitation mécanique à vitesse modérée pour obtenir la composition (E9).

### Exemple 10 : Préparation d'une émulsion eau dans huile concentrée selon l'invention, composée d'éthyl hexyl palmitate en tant que phase grasse et de PGGA de sodium réticulé par de l'éthylène glycol diglycidyl ether (EGDGE) en phase aqueuse (pH = 6,0)

Le procédé de synthèse comprend les étapes suivantes :
- Etape a) : Réalisation d'un gel de PGGA de sodium :
   - 130 grammes d'eau déminéralisée sont placés sous agitation mécanique avec un agitateur de marque Rayneri équipé d'un mobile de type défloculeuse.
   - 10 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel entre 5,5 et 6 à une température de 20°C à l'aide d'une solution de NaOH 4M.
- Etape c) Ajout de 0,25 grammes d'Éthylène glycol diglycidyl ether (commercialisé sous le nom d'ERISYS^{™} EGDGE par la société EMERALD) à la phase aqueuse préparée à l'étape b)
- Etape d) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymul^{™}s PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR^{™} H par la société ExxonMobil Chemical) ;
      Agiter le mélange constitué de l'ensemble des ingrédients ci-dessus pesés avec un agitateur magnétique muni d'un barreau aimanté.
- Etape e) : Pré-émulsification : Ajout de la phase organique préparée à l'étape d) sur la phase aqueuse préparée à l'étape c) sous agitation mécanique avec un agitateur de marque Rayneri^{™} équipé d'un mobile de type défloculeuse.
- Etape f) : Emulsification cisaillante avec un agitateur de marque Silverson^{™} L4RT pendant 2 minutes à une vitesse de 7500 tours/min.
- Etape g) : Distillation sous vide dans un réacteur sous vide partiel de l'huile légère et de l'eau.
- Etape h) : Ajout de tensioactifs huile-dans-eau à l'émulsion concentrée obtenue à l'étape f) : pesée de 8 grammes d'émulsion concentrée obtenue à l'étape g) et de 2 grammes de Polyglycéryl-6 laurate ;
   Le mélange est homogénéisé à température ambiante sous agitation mécanique à vitesse modérée pour obtenir la composition (E10).

### Exemple 11 : Préparation d'une émulsion eau dans huile concentrée selon l'invention, composée d'éthyl hexyl palmitate en tant que phase grasse et de PGGA de sodium réticulé par du 1,4-butanediol diglycidyl ether en phase aqueuse (pH = 6,0)

Le procédé de synthèse comprend les étapes suivantes :
- Etape a) : Réalisation d'un gel de PGGA de sodium :
   - 100 grammes d'eau déminéralisée sont placés sous agitation mécanique par un agitateur de marque Rayneri^{™} équipé d'un mobile de type défloculeuse.
   - 40 grammes de PGGA commercialisé sous le nom de marque "PolyGammaGlutamate de sodium de grade cosmétique" par la société LUBON sont ajoutés lentement dans le vortex.
- Etape b) : Ajustement du pH du milieu réactionnel entre 5,5 et 6 à une température de 20°C à l'aide d'une solution de NaOH 4M.
- Etape c) Ajout de 0,80 grammes de 1,4-Butanediol diglycidyl ether (commercialisé sous le nom d'ERISYS^{™} GE 21 par la société EMERALD) à la phase aqueuse préparée à l'étape b)
- Etape d) : Préparation de la phase organique dans un bécher de 100 grammes :
   - Peser 5 grammes d'oléate de sorbitan (commercialisé sous le nom de MONTANE^{™}80 VG par la société SEPPIC)
   - Peser 5 grammes de Polyglycéryl-2 Dipolyhydroxystéarate (commercialisé sous le nom de Dehymuls^{™} PGPH par la société BASF)
   - Peser 20 grammes d'éthyl hexyl palmitate (commercialisé sous le nom de DUB PO par la société stéarinerie dubois)
   - Peser 30 grammes de C11-12 Isoparaffine (commercialisé sous le nom d'ISOPAR^{™} H par la société ExxonMobil Chemical) ; Agiter le mélange constitué par l'ensemble des constituants pesés avec un agitateur magnétique muni d'un barreau aimanté.
- Etape e) : Pré-émulsification : Ajout de la phase organique préparée à l'étape d) sur la phase aqueuse préparée à l'étape c) sous agitation mécanique avec un agitateur de marque Rayneri équipé d'un mobile de type défloculeuse.
- Etape f) : Emulsification cisaillante avec un agitateur de marque Silverson L4RT pendant 2 minutes à une vitesse de 7500 tours/min.
- Etape g) : Distillation sous vide dans un réacteur sous vide partiel de l'huile légère et de l'eau.
- Etape h) : Ajout de tensioactifs huile-dans-eau à l'émulsion concentrée obtenue à l'étape g) : pesée de 8 grammes d'émulsion concentrée obtenue à l'étape g) et de 2 grammes de Polyglycéryl-6 laurate ;
   Le mélange est homogénéisé à température ambiante sous agitation mécanique à vitesse modérée pour obtenir la composition (E11).

Evaluation des compositions (E1) à (E11) selon l'invention. L'évaluation des compositions (E1) à (E11) selon l'invention est réalisée comme décrit ci-dessous :
- Peser 192 grammes d'eau dans un bécher de 400 ml forme haute
- Ajouter sous agitation mécanique, avec un agitateur de marque Rayneri muni d'un mobile de type défloculeuse, 8 grammes de compositions (E1) à (E11)
- Laisser agiter jusqu'à obtention d'un gel homogène.
- Mesurer la viscosité dynamique des gels homogènes à l'aide d'un viscosimètre de marque Brookfield RVT, à la vitesse de 5 tours/min en choisissant le mobile approprié.
- Ajouter 0,1% massique de chlorure de sodium sur le gel précédemment réalisé, et agiter avec un agitateur mécanique de marque Rayneri muni d'un mobile de type défloculeuse.
- Mesurer ensuite la viscosité dynamique d'un tel nouveau gel à l'aide d'un viscosimètre de marque Brookfield RVT à la vitesse de 5 tours/min en choisissant le mobile approprié.
   Les résultats sont consignés dans le tableau 1 ci-dessous.

**[Tableau 1]**

| Composition | Viscosité gel 4% massique de composition | Viscosité gel 4% massique de composition + 0,1% massique NaCl | Equivalent % massique en matière active | Viscosité gel obtenus à l'étape a) du procédé de préparation |
|---|---|---|---|---|
| | Brookfield^{™} RVT Vitesse 5 | Brookfield^{™} RVT Vitesse 5 | polymérique | Brookfield^{™} RVT Vitesse 5 |
| | Mobile (x) | Mobile (x) | | Mobile (x) |
| Essai Témoin | gel 2% = 176 mPa.s | gel 2% + 0.1% NaCl = 128 mPa.s | 2% | gel 2% = 128 mPa.s |
| "PGGA de sodium de grade | | | | |
| cosmétique" commercialisé par la société LUBON | (Mobile 2) | (Mobile 2) | | (Mobile 2) |
| Composition (E₁) | 76.200 mPa.s (Mobile 6) | 73.000 mPa.s (Mobile 6) | 2% | 18.120 mPa.s (Mobile 3) |
| Composition (E₂) | 124.200 mPa.s (Mobile 6) | 89.400 mPa.s (Mobile 6) | 1,6% | 5.040 mPa.s (Mobile 3) |
| Composition (E₃) | 91.600 mPa.s (Mobile 6) | 816 mPa.s (Mobile 3) | 2% | 18.120 mPa.s (Mobile 3) |
| Composition (E₄) | 117.200 mPa.s (Mobile 6) | 58.600 mPa.s (Mobile 6) | 1,6% | 5.040 mPa.s (Mobile 3) |
| Composition (E₅) | 9.820 mPa.s (Mobile 3)* | 8860 mPa.s (Mobile 6)* | 1,6% | 5.040 mPa.s (Mobile 3) |
| Composition (E₆) | 131.800 mPa.s (Mobile 6)* | 102.800 mPa.s (Mobile 6)* | 1,6% | 5.040 mPa.s (Mobile 3) |
| Composition (E₇) | 167.600 mPa.s (Mobile 6) | 118.400 mPa.s (Mobile 6) | 1,6% | 5.040 mPa.s (Mobile 3) |
| Composition (E₈) | 9.540 mPa.s (Mobile 3) | 8.860 mPa.s (Mobile 3) | 1,6% | 5.040 mPa.s (Mobile 3) |
| Composition (E₉) | 91.800 mPa.s (Mobile 6) | 34.600 mPa.s (Mobile 6) | 1,33% | 18.120 mPa.s (Mobile 3) |
| Composition (E₁₀) | 78.000 mPa.s (Mobile 6) | 600 mPa.s (Mobile 2) | 1% | 900 mPa.s (Mobile 3) |
| Composition (E₁₁) | 74.800 mPa.s (Mobile 6) | 48.400 mPa.s (Mobile 6) | 2,28% | 50.000 mPa.s (Mobile 6) |

| | | | | |
|---|---|---|---|---|
| viscosités dynamiques de gels aqueux obtenus avec les compositions (E₁) à (E₁₁) * valeurs de viscosités des gels à pH 6 | | | | |

Les compositions (E1) à (E11) selon l'invention permettent d'obtenir des gels aqueux épaissis par rapport au gel aqueux obtenu à partir d'un gamma-polyglutamate de sodium non réticulé ("essai témoin").

Ainsi, à pourcentage massique polymérique égal à 2%, les gels aqueux obtenus avec les compositions (E1) et (E3) montrent respectivement une viscosité de 76 000 mPa.s et de 91 600 mPa.s alors que le gel aqueux obtenu avec le gamma-polyglutamate de sodium non réticulé ( "essai témoin") se caractérise par une viscosité de 176 mPa.s.

De même, à pourcentage massique polymérique inférieur à 2%, les gels aqueux obtenus avec les compositions (E2), (E4), (E8), (E9) et (E10) montrent respectivement une viscosité de 124.000 mPa.s, 117.200 mPa.s, 9.540 mPa.s, 91.800 mPa.s et de 78.000 mPa.s, alors que le gel aqueux obtenu avec 2% massique gamma-polyglutamate de sodium non réticulé ( "essai témoin") se caractérise par une viscosité de 176 mPa.s.

## Revendications

1. Composition aqueuse phytosanitaire (F) comprenant au moins un principe actif phytosanitaire et comme agent épaississant et pour 100% de sa masse, de 0,1 % à 10% massique d'une composition (C_{A}) comprenant au moins un agent émulsionnant de type eau-dans-huile (S1) et au moins au moins un agent émulsionnant de type huile-dans-eau (S2) se présentant sous la forme d'une émulsion de type eau-dans-huile auto-inversible comprenant pour 100% de sa masse une teneur massique supérieure ou égale à 20% et inférieure ou égale à 60% d'acide gamma-poly(glutamique) (PGGA) sous forme acide, ou partiellement ou totalement salifié consistant en des unités monomériques issues d'acide glutamique (GA), partiellement ou totalement salifié, et en, pour 100% molaire des dites unités monomériques issues de l'acide glutamique (GA), de 0,5% à 20% molaire d'unités issues d'-un agent réticulant (AR) portant au moins deux fonctions glycidyle, ledit agent réticulant (AR) étant choisi parmi les membres du groupe constitué par :
- L'éthylèneglycol diglycidyl éther de formule (I) : 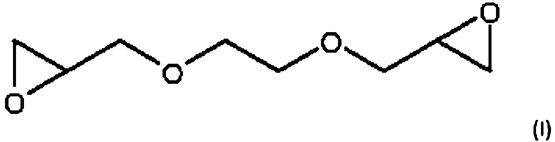
- Le 1,3-propanediol diglycidyl éther de formule (III) : 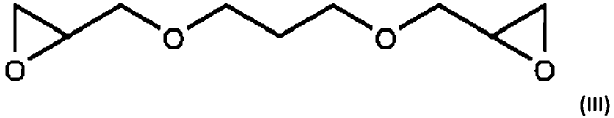
- Le 1,2-propanediol diglycidyl éther de formule (IV) : 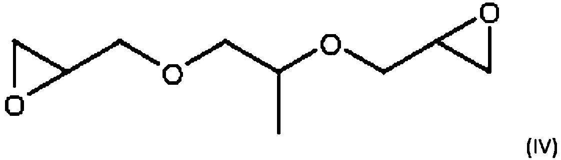
- Le 1,4-butanediol diglycidyl éther de formule (V) : 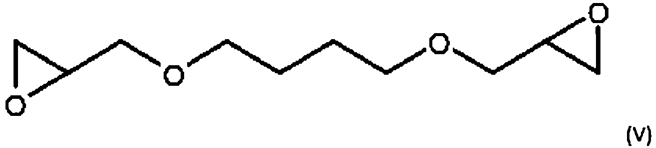
- le 1,2-butanediol diglycidyl éther de formule (VI) : 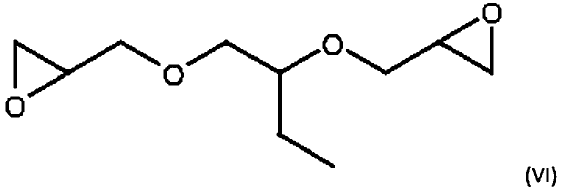
- Le 1,3-butanediol diglycidyl éther de formule (VII) : 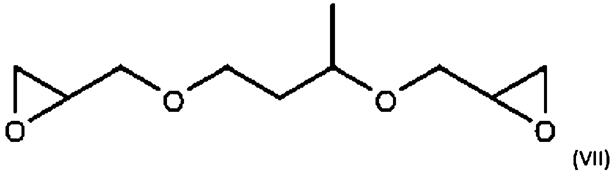
- Le 1,6-hexanediol diglycidyl éther de formule (VIII) : 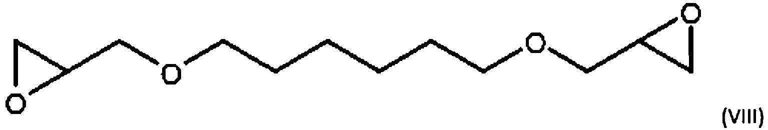
- Le triméthylol Ethane Triglycidyl Ether de formule (IXb) : 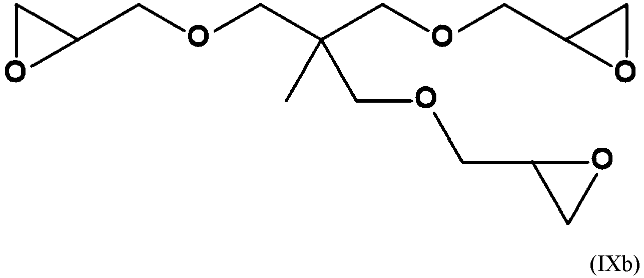
- Le Triméthylol Propane diglycidyl Ether de formule (Xa) : 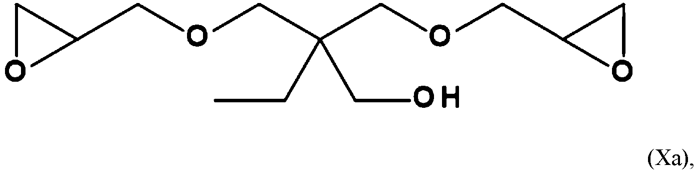 et
- Le pentaérythritol diglycidyl Ether de composé de formule (XIa) :

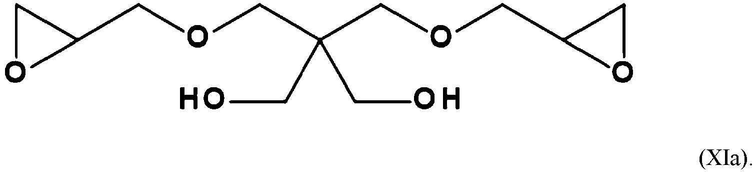

2. Composition phytosanitaire (F) selon la revendication 1, **caractérisée en ce que** la composition (C_{A}) présente une viscosité comprise entre 100 mPa.s et 10.000 mPa.s, mesurée avec un viscosimètre Brookfield^{™}, type RVT, vitesse 5 tours par minute.

3. Composition phytosanitaire (F) selon l'une des revendications 1 ou 2 **caractérisée en ce que** la composition (CA) comprend en outre une unité monomérique issue du composé de formule (X') : 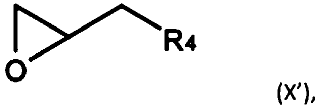 Avec R4 représentant un radical hydrocarboné linéaire ou ramifié, saturé ou insaturé, fonctionnalisé ou non et comportant de 6 à 22 atomes de carbone.

4. Composition phytosanitaire (F) selon l'une des revendications 1 à 3, **caractérisée en ce que** le principe actif phytosanitaire est un fongicide, un bactéricide, un herbicide, un insecticide ou un élément nutritif favorisant la croissance des plantes.

5. Procédé de préparation d'une composition phytosanitaire (F) telle que définie à l'une des revendications 1 à 4, comprenant :
- une étape A) de préparation de la composition (C_{A}) comprenant les sous-étapes suivantes :
a. préparation d'une solution aqueuse comprenant pour 100% de sa masse entre 5 et 70% massique d'acide gamma- poly(glutamique) (PGGA), partiellement ou totalement salifié, et ledit agent réticulant (AR) comprenant au moins deux fonctions glycidylique,
b. ajustement du pH de la solution aqueuse obtenue à l'étape a) à un pH compris entre 3 et 11 ;
c. préparation d'une phase organique contenant au moins une huile volatile, au moins une autre huile non volatile (H) et au moins un agent tensioactif émulsionnant de type eau dans huile (S₁):
d. pré-émulsification par ajout sous agitation de la phase organique obtenue à l'étape c) sur la solution aqueuse obtenue à l'étape b), de manière à ce que le rapport massique entre la solution aqueuse et la phase organique est compris entre 90/10 et 10/90, de préférence entre 20/80 et 40/60 ;
e. émulsification de la pré-émulsion obtenue à l'étape d) par homogénéisation sous agitation ;
f. distillation de l'eau et de l'huile volatile contenues dans l'émulsion obtenue à l'étape e) ;
g. ajout d'au moins un agent tensioactif émulsionnant de type huile-dans-eau (S₂) de manière à obtenir la composition (C_{A}) et
- Une étape B) de mélange de la composition (C_{A}) préparée lors de l'étape A) avec de l'eau, et au moins un principe actif phytosanitaire.

6. Procédé selon la revendication 5, **caractérisé en ce qu'**à l'étape a) l'ensemble des unités monomériques constituant l'acide gamma-polyglutamique est issu du glutamate de sodium, du glutamate de potassium, du glutamate d'ammonium, du glutamate de calcium, du glutamate de magnésium ou d'un mélange de ces formes.

7. Procédé selon l'une des revendications 5 ou 6, **caractérisé en ce qu'**à l'étape c) l'au moins agent émulsionnant de type eau-dans-huile (S₁) est choisi parmi les éléments du groupe constitué par les esters de sorbitan, les esters de polyglycérols, les esters de polyglycérols alcoxylés, les polyhydroxystéarates de polyglycols, les polyhydroxystéarates de polyglycérols, les polyhydroxystéarates de polyglycérols alcoxylés.

8. Procédé selon l'une des revendications 5 à 7, **caractérisé en ce qu'**à l'étape g) ledit au moins agent tensioactif émulsionnant de type huile-dans-eau (S2) est choisi parmi les éléments du groupe constitué par un alcool gras polyéthoxylé, un ester d'hexitan polyéthoxylé, un alkylpolyglycoside, une composition d'alkylpolyglycoside et d'alcools gras, un ester de polyglycérol, une composition d'ester de polyglycérol et de polyglycérol.

9. Utilisation de ladite composition aqueuse liquide phytosanitaire (F) telle que définie à l'une des revendications 1 à 4, pour prévenir et/ou traiter les plantes susceptibles d'être affectées ou affectées par une maladie fongique et/ou par des plantes parasites et/ou par une maladie bactérienne et/ou par des insectes.

10. Procédé de traitement d'une plante **caractérisé en ce qu'**il comprend au moins une étape d'application de la composition phytosanitaire (F) telle que définie à l'une des revendications 1 à 4 sur la plante par aspersion et/ou par pulvérisation et/ou par arrosage et/ou sous toute autre forme permettant ladite application.

## Patentansprüche

1. Wässrige Pflanzenschutzzusammensetzung (F), umfassend mindestens einen Pflanzenschutzwirkstoff und, als Verdickungsmittel und bezogen auf 100 % ihrer Masse, von 0,1 bis 10 Massen-% einer Zusammensetzung (C_{A}), umfassend mindestens einen Wasser-in-Öl-Emulgator (S1) und mindestens einen Öl-in-Wasser-Emulgator (S2), die in Form einer selbstinvertierenden Wasser-in-Öl-Emulsion vorliegt, umfassend, bezogen auf 100 % ihrer Masse, einen Massenanteil von größer als oder gleich 20 % und kleiner als oder gleich 60 % an Gamma-Poly(glutaminsäure) (PGGA) in Säureform oder teilweise oder vollständig in Salzform, bestehend aus Monomereinheiten, die aus Glutaminsäure (GA) stammen, die teilweise oder vollständig in Salzform ist, und aus, bezogen auf 100 Mol-% der aus Glutaminsäure (GA) stammenden Monomereinheiten, 0,5 Mol-% bis 20 Mol-% Einheiten, die aus einem Vernetzungsmittel (AR) stammen, das mindestens zwei Glycidylfunktionen trägt, wobei das Vernetzungsmittel (AR) ausgewählt ist aus den Mitgliedern der Gruppe, bestehend aus:
- Ethylenglykoldiglycidylether der Formel (I): 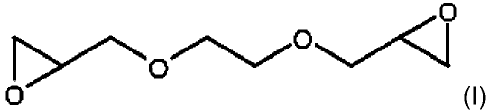
- 1,3-Propandioldiglycidylether der Formel (III): 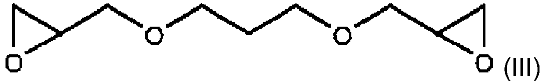
- 1,2-Propandioldiglycidylether der Formel (IV): 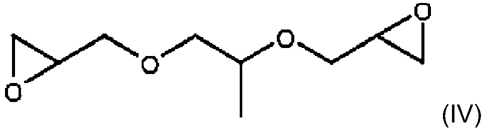
- 1,4-Butandioldiglycidylether der Formel (V): 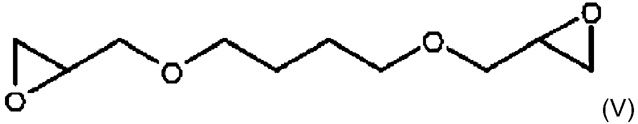
- 1,2-Butandioldiglycidylether der Formel (VI): 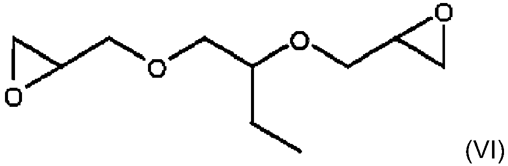
- 1,3-Butandioldiglycidylether der Formel (VII): 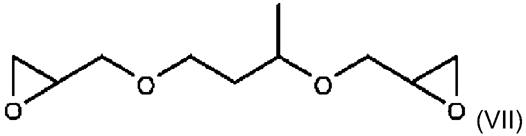
- 1,6-Hexandioldiglycidylether der Formel (VIII): 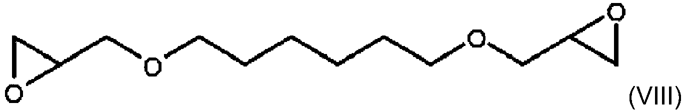
- Trimethylolethantriglycidylether der Formel (IXb): 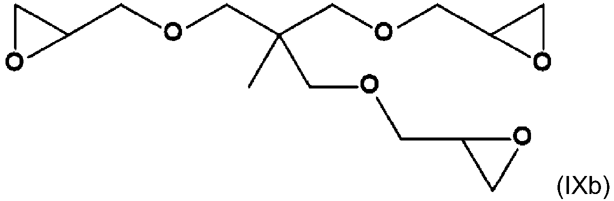
- Trimethylolpropandiglycidylether der Formel (Xa): 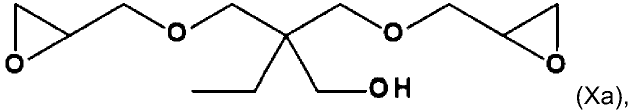 und
- Pentaerythritdiglycidylether der Verbindung der Formel (Xla):

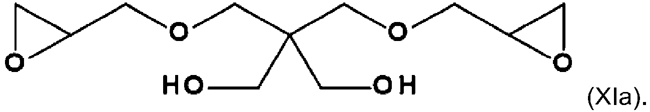

2. Pflanzenschutzzusammensetzung (F) nach Anspruch 1,
**dadurch gekennzeichnet, dass** die Zusammensetzung (C_{A}) eine Viskosität zwischen 100 mPa.s und 10.000 mPa.s aufweist, gemessen mit einem Brookfield^{™}-Viskosimeter, Typ RVT, Geschwindigkeit 5 Umdrehungen pro Minute.

3. Pflanzenschutzzusammensetzung (F) nach einem der Ansprüche 1 oder 2, **dadurch gekennzeichnet, dass** die Zusammensetzung (CA) ferner eine Monomereinheit umfasst, die aus der Verbindung der Formel (X') stammt: 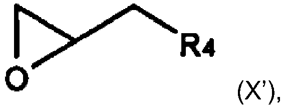 wobei R4 für einen linearen oder verzweigten, gesättigten oder ungesättigten, funktionalisierten oder nicht funktionalisierten Kohlenwasserstoffrest steht, der 6 bis 22 Kohlenstoffatome vorweist.

4. Pflanzenschutzzusammensetzung (F) nach einem der Ansprüche 1 bis 3, **dadurch gekennzeichnet, dass** der Pflanzenschutzwirkstoff ein Fungizid, ein Bakterizid, ein Herbizid, ein Insektizid oder ein pflanzenwachstumsfördernder Nährstoff ist.

5. Verfahren zum Herstellen einer Pflanzenschutzzusammensetzung (F), wie in einem der Ansprüche 1 bis 4 definiert, umfassend:
- einen Schritt A) zum Herstellen der Zusammensetzung (C_{A}), umfassend die folgenden Teilschritte:
a. Herstellen einer wässrigen Lösung, umfassend, bezogen auf 100 % ihrer Masse, zwischen 5 und 70 Massen-% Gamma-Poly(glutaminsäure) (PGGA), die teilweise oder vollständig in Salzform ist, und das Vernetzungsmittel (AR), umfassend mindestens zwei Glycidylfunktionen,
b. Einstellen des pH-Werts der in Schritt a) erhaltenen wässrigen Lösung auf einen pH-Wert zwischen 3 und 11;
c. Herstellen einer organischen Phase, die mindestens ein flüchtiges Öl, mindestens ein weiteres nichtflüchtiges Öl (H) und mindestens ein emulgierendes Wasser-in-Öl-Tensid (S₁) enthält;
d. Voremulgieren durch Zugeben unter Rühren der in Schritt c) erhaltenen organischen Phase zu der in Schritt b) erhaltenen wässrigen Lösung, derart, dass das Massenverhältnis zwischen der wässrigen Lösung und der organischen Phase zwischen 90/10 und 10/90, vorzugsweise zwischen 20/80 und 40/60, liegt;
e. Emulgieren der in Schritt d) erhaltenen Voremulsion durch Homogenisieren unter Rühren;
f. Destillieren des Wassers und des flüchtigen Öls, die in der in Schritt e) erhaltenen Emulsion enthalten sind;
g. Zugeben von mindestens einem emulgierenden Öl-in-Wasser-Tensid (S₂), um die Zusammensetzung (C_{A}) zu erhalten, und
- einen Schritt B) zum Mischen der in Schritt A) hergestellten Zusammensetzung (C_{A}) mit Wasser und mindestens einem Pflanzenschutzwirkstoff.

6. Verfahren nach Anspruch 5, **dadurch gekennzeichnet, dass** in Schritt a) die Gesamtheit der Monomereinheiten, die die Gamma-Polyglutaminsäure bilden, aus Natriumglutamat, Kaliumglutamat, Ammoniumglutamat, Calciumglutamat, Magnesiumglutamat oder einer Mischung dieser Formen stammt.

7. Verfahren nach einem der Ansprüche 5 oder 6,
**dadurch gekennzeichnet, dass** in Schritt c) der mindestens eine Wasser-in-Öl-Emulgator (S₁) aus den Elementen der Gruppe ausgewählt ist, bestehend aus Sorbitanestern, Polyglycerinestern, alkoxylierten Polyglycerinestern, Polyglykolpolyhydroxystearaten, Polyglycerinpolyhydroxystearaten, alkoxylierten Polyglycerinpolyhydroxystearaten.

8. Verfahren nach einem der Ansprüche 5 bis 7,
**dadurch gekennzeichnet, dass** in Schritt g) das mindestens eine emulgierende Öl-in-Wasser-Tensid (S2) aus den Elementen der Gruppe ausgewählt ist, bestehend aus einem polyethoxylierten Fettalkohol, einem polyethoxylierten Hexitanester, einem Alkylpolyglycosid, einer Zusammensetzung aus Alkylpolyglycosid und Fettalkoholen, einem Polyglycerinester, einer Zusammensetzung aus Polyglycerinester und Polyglycerin.

9. Verwendung der wässrigen flüssigen Pflanzenschutzzusammensetzung (F), wie in einem der Ansprüche 1 bis 4 definiert, zum Vorbeugen und/oder Behandeln von Pflanzen, die von einer Pilzerkrankung und/oder von parasitären Pflanzen und/oder von einer bakteriellen Erkrankung und/oder von Insekten befallen werden können oder befallen sind.

10. Verfahren zum Behandeln einer Pflanze, **dadurch gekennzeichnet, dass** es mindestens einen Schritt zum Aufbringen der Pflanzenschutzzusammensetzung (F), wie in einem der Ansprüche 1 bis 4 definiert, auf die Pflanze durch Berieselung und/oder durch Besprühen und/oder durch Gießen und/oder in jeder anderen Form, die das Aufbringen ermöglicht, umfasst.

## Claims

1. Aqueous plant-protection composition (F) comprising at least one plant-protection active ingredient and, as a thickening agent and per 100% of its mass, from 0.1% to 10% by mass of a composition (C_{A}) comprising at least one water-in-oil emulsifier (S1) and at least one oil-in-water emulsifier (S2) in the form of a self-inverting water-in-oil emulsion comprising, per 100% of its mass, a mass content of greater than or equal to 20% and less than or equal to 60% of gamma-poly(glutamic) acid (PGGA) in its acid form, or partially or fully salified, consisting of monomer units derived from glutamic acid (GA), partially or fully salified, and, per 100 mol% of said monomer units derived from glutamic acid (GA), from 0.5 mol% to 20 mol% of units derived from a crosslinking agent (AR) having at least two glycidyl groups, said crosslinking agent (AR) being selected from the members of the group consisting of:
- ethylene glycol diglycidyl ether of formula (I): 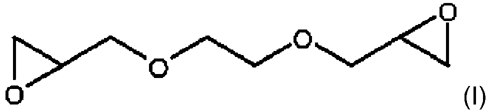
- 1,3-propanediol diglycidyl ether of formula (III): 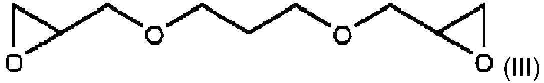
- 1,2-propanediol diglycidyl ether of formula (IV): 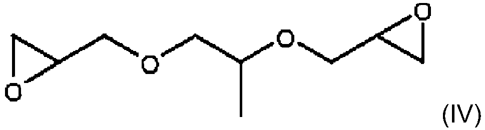
- 1,4-butanediol diglycidyl ether of formula (V): 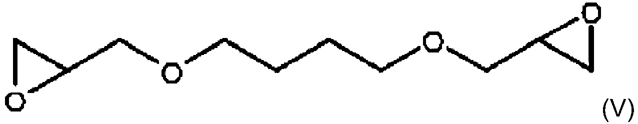
- 1,2-butanediol diglycidyl ether of formula (VI): 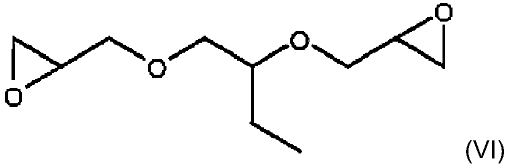
- 1,3-butanediol diglycidyl ether of formula (VII): 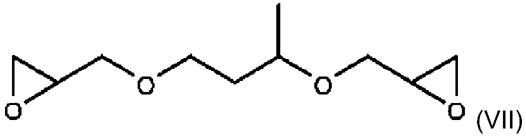
- 1,6-hexanediol diglycidyl ether of formula (VIII): 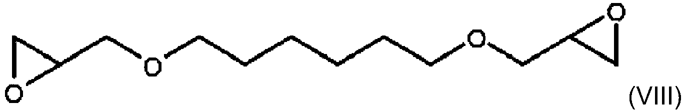
- trimethylol ethane triglycidyl ether of formula (IXb): 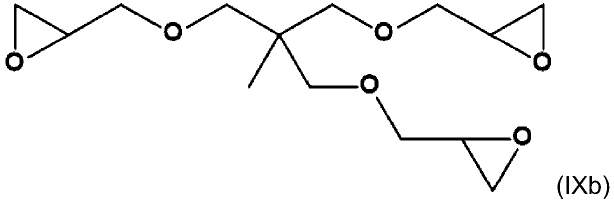
- trimethylol propane diglycidyl ether of formula (Xa): 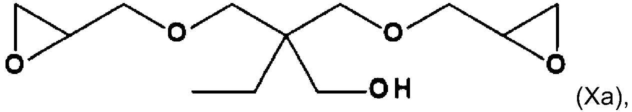 and
- pentaerythritol diglycidyl ether compound of formula (XIa):

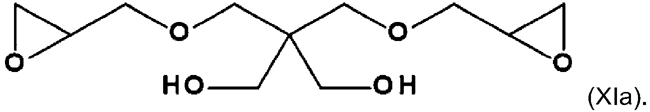

2. Plant-protection composition (F) according to claim 1,
**characterized in that** the composition (C_{A}) has a viscosity of between 100 mPa·s and 10,000 mPa·s, measured using an RVT Brookfield^{™} viscometer at a speed of 5 revolutions per minute.

3. Plant-protection composition (F) according to either of claims 1 or 2, **characterized in that** the composition (CA) further comprises a monomer unit derived from the compound of formula (X'): 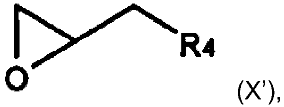 where R4 represents a linear or branched, saturated or unsaturated, functionalized or non-functionalized hydrocarbon radical having from 6 to 22 carbon atoms.

4. Plant-protection composition (F) according to any of claims 1 to 3, **characterized in that** the active plant-protection ingredient is a fungicide, a bactericide, a herbicide, an insecticide, or a plant growth-promoting nutrient.

5. Method for preparing a plant-protection composition (F) as defined in any of claims 1 to 4, comprising:
- a step A) of preparing the composition (C_{A}), comprising the following substeps:
a. preparing an aqueous solution comprising, per 100% of its mass, between 5 and 70% by mass of gamma-poly(glutamic) acid (PGGA), partially or fully salified, and said crosslinking agent (AR) comprising at least two glycidyl groups,
b. adjusting the pH of the aqueous solution obtained in step a) to a pH of between 3 and 11;
c. preparing an organic phase containing at least one volatile oil, at least one other nonvolatile oil (H), and at least one water-in-oil emulsifying surfactant (S₁);
d. performing pre-emulsification by adding, while stirring, the organic phase obtained in step c) to the aqueous solution obtained in step b) such that the mass ratio between the aqueous solution and the organic phase is between 90:10 and 10:90, preferably between 20:80 and 40:60;
e. emulsifying the pre-emulsion obtained in step d) by homogenization by stirring;
f. distilling the water and volatile oil contained in the emulsion obtained in step e);
g. adding at least one oil-in-water emulsifying surfactant (S₂) to obtain the composition (C_{A}), and
- a step B) of mixing the composition (C_{A}) prepared during step A) with water and at least one active plant-protection ingredient.

6. Method according to claim 5, **characterized in that**, in step a), all of the monomer units constituting gamma-polyglutamic acid are derived from sodium glutamate, potassium glutamate, ammonium glutamate, calcium glutamate, magnesium glutamate, or a mixture of these forms.

7. Method according to either of claims 5 or 6, **characterized in that**, in step c), the at least one water-in-oil emulsifier (S₁) is selected from the elements of the group consisting of sorbitan esters, polyglycerol esters, alkoxylated polyglycerol esters, polyglycol polyhydroxystearates, polyglycerol polyhydroxystearates, and alkoxylated polyglycerol polyhydroxystearates.

8. Method according to any of claims 5 to 7, **characterized in that**, in step g), said at least one oil-in-water emulsifying surfactant (S2) is selected from the elements of the group consisting of a polyethoxylated fatty alcohol, a polyethoxylated hexitan ester, an alkyl polyglycoside, a composition of alkyl polyglycoside and fatty alcohols, a polyglycerol ester, and a composition of polyglycerol ester and polyglycerol.

9. Use of said liquid aqueous plant-protection composition (F) as defined in any of claims 1 to 4, to prevent and/or treat plants susceptible to or affected by fungal disease and/or by parasitic plants and/or by bacterial disease and/or by insects.

10. Method for treating a plant, **characterized in that** it comprises at least one step of applying the plant-protection composition (F) as defined in any of claims 1 to 4 to the plant by spraying and/or misting and/or watering and/or any other means making said application possible.
